(19) **Europäisches Patentamt / European Patent Office / Office européen des brevets**

(11) **EP 4 751 899 A1**

(12) **EUROPEAN PATENT APPLICATION**

(43) Date of publication:
**03.06.2026 Bulletin 2026/23**

(21) Application number: **25220205.6**

(22) Date of filing: **02.12.2025**

(51) International Patent Classification (IPC):
**B29C 71/02** $^{(2006.01)}$  **B29C 71/04** $^{(2006.01)}$
**B33Y 40/20** $^{(2020.01)}$  B29C 64/30 $^{(2017.01)}$
**A61C 13/15** $^{(2006.01)}$

(52) Cooperative Patent Classification (CPC):
**B29C 71/02; A61C 19/003; B29C 64/124;**
**B29C 71/04; B33Y 40/20;** B29C 64/30;
B29C 2035/0827

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **02.12.2024 US 202418965739**

(71) Applicant: **SprintRay Inc.**
**Los Angeles, CA 90065 (US)**

(72) Inventors:
• **Mansouri, Amir**
**Los Angeles, 90065 (US)**
• **Bassir, Hossein**
**Los Angeles, 90065 (US)**
• **Patel, Aayush**
**Los Angeles, 90065 (US)**
• **Tian, Huijian**
**Los Angeles, 90065 (US)**
• **Leal, Eric**
**Los Angeles, 90065 (US)**
• **Zhang, Fangzhou**
**Los Angeles, 90065 (US)**

(74) Representative: **AWA Denmark A/S**
**Strandgade 56**
**1401 Copenhagen K (DK)**

(54) **POST-CURING DEVICE WITH HEATING AND COOLING SYSTEM**

(57) A device (1000) for post-curing a three-dimensionally (3D) printed object, comprising: a curing chamber (1001) formed by a body (1007) with a removable platform (1002) adapted to receive a 3D-printed part; one or more curing light assemblies (1003) coupled to the body (1007) and adapted to emit curing light onto the 3D-printed part; an airflow module (1004) for generating an airflow within the curing chamber (1001); and a heating module (1005) adapted to control a temperature of the airflow; wherein the airflow module (1004) and heating module (1005) are configured to simultaneously: dissipate residual heat from the curing chamber (1001), and heat the airflow circulated within the curing chamber (1001) to facilitate curing the 3D-printed object.

FIG. 19A

EP 4 751 899 A1

**Description**

PRIORITY AND RELATED APPLICATIONS

This application is a continuation-in-part of U.S. nonprovisional application 18/216,471, filed on June 29, 2023, which is a continuation of U.S. nonprovisional application 17/902,221, filed on September 2, 2022, which is a continuation of U.S. nonprovisional application 17/511,881, filed on October 27, 2021, which claims priority to U.S. Provisional Application No. 63/083,772, filed on filed on September 25, 2020, the disclosure of which are incorporated by reference in their entirety.

TECHNICAL FIELD OF THE INVENTION

The present invention relates generally to stereolithography additive manufacturing. More specifically, the present invention relates to selectively post curing parts that have been printed with stereolithography additive manufacturing techniques.

COPYRIGHT AND TRADEMARK NOTICE

Certain marks referenced herein may be common law or registered trademarks of third parties affiliated or unaffiliated with the applicant or the assignee. Use of these marks is by way of example and should not be construed as descriptive or to limit the scope of this invention to material associated only with such marks.

BACKGROUND OF THE INVENTION

One of the challenges of three-dimensional (3D) printing using stereolithography is that the generated 3D objects generally comprise of uniform material properties. That is, because of the current limitations and or techniques involved in 3D printing 3D objects, it has not been possible to generate or print certain 3D objects with varying material properties, which may be desirable for some applications. For example, stereolithography is one of the commonly used techniques for printing parts in many industries including dentistry. In dentistry, it may be desirable to create or print a 3D object with a variable color shade, with a variable opacity, or with other variable material properties.

Currently, once a part or 3D object is printed, the 3D object is typically post cured in a curing chamber with a massive amount of energy to achieve the desired and formulated properties. However, this process does not result in a 3D object with variable properties. Therefore, there is a need for a system and method that addresses these shortcomings, and it is to these ends that the present invention has been developed.

SUMMARY OF THE INVENTION

According to the present invention, a system and method is described for selectively post curing three-dimensionally (3D) printed objects that have been printed with stereolithography additive manufacturing techniques, to create a cured 3D-printed object with variable properties. These variable properties may include, without limitation, a variable color shade, a variable opacity, variable flexural strengths, variable modulus, or other variable material properties that may be achieved via post-curing means.

In some exemplary embodiments, the invention involves a system for selectively post-curing a 3D-printed object to attain variable properties. This system may include: a processing module for receiving data concerning the 3D-printed object and determining a curing toolpath configured to achieve a post-cured 3D-printed object having variable properties along different regions of the 3D-printed object; and a selective post-curing module, including a chamber with a light source configured to house the 3D-printed object and selectively emitting a curing light onto the 3D-printed object.

In some exemplary embodiments, a system for selectively post-curing a 3D-printed object to attain variable properties may include: a selective post-curing chamber adapted to receive a 3D-printed object; a post-curing light source housed in the selective post-curing chamber; and a computer coupled to the post-curing light source including one or more executable instructions for selectively emitting a curing light onto the 3D-printed object along a predetermined curing toolpath based on data of the 3D-printed object, wherein curing the 3D-printed object along the predetermined curing toolpath generates variable properties along different regions of the 3D-printed object.

In some exemplary embodiments, a method for selectively post-curing a 3D-printed object to attain variable properties may include the steps of: receiving data concerning a 3D-printed object; determining a curing toolpath configured to achieve a post-cured 3D object having variable properties along different regions of the 3D-printed object; and selectively emitting a curing light onto the 3D-printed object along the curing toolpath, wherein curing the 3D-printed object along the curing toolpath generates the variable properties along the different regions of the 3D-printed object.

In some exemplary embodiments, a method for selectively post-curing a 3D-printed object to attain variable properties may include the steps of: mounting a 3D-printed object in a selective post-curing chamber including a post-curing light source configured to emit a curing light onto the 3D-printed object; receiving data of the 3D-printed object concerning a curing toolpath; and selectively emitting a curing light onto the 3D-printed object along the curing toolpath based on the model data, wherein curing the 3D-printed object along the curing toolpath generates variable properties along different regions of the 3D-printed object.

In some exemplary embodiments, the invention involves a system for selectively post-curing a 3D-printed object to attain variable properties. The system may comprise: a chamber; a platform arranged within the chamber for supporting at least one 3D-printed object; a light source assembly arranged within the chamber and configured to emit one or more wavelengths of a curing light onto the 3D-printed object; a movement module configured to move the light source assembly or the platform in order to selectively expose different regions of the 3D-pritned object to the curing light along a predetermined curing path of the 3D-printed object; and a processing module in communication with the light source assembly and the movement module, the processing module including one or more executable instructions configured to: receive a user input concerning the 3D-printed object, the user input indicative of the curing path for post-curing the 3D-printed object; move the light source assembly or the platform according to the curing path; and emit the curing light onto the 3D-printed object along the curing toolpath to create a post-cured 3D-printed object.

In some exemplary embodiments, the system may comprise: a chamber; a platform arranged within the chamber for supporting at least one 3D-printed object; a light source assembly arranged within the chamber and configured to emit one or more wavelengths of a curing light onto the 3D-printed object, wherein the light source assembly includes at least one light source disposed above the platform and at least one light source disposed below the platform; a movement module configured to move the light source assembly or the platform in order to selectively expose different regions of the 3D-pritned object to the curing light along a predetermined curing path of the 3D-printed object; and a processing module in communication with the light source assembly and the movement module, the processing module including one or more executable instructions configured to: receive a user input concerning the 3D-printed object, the user input indicative of the curing path for post-curing the 3D-printed object; move the light source assembly or the platform according to the curing path; and emit the curing light onto the 3D-printed object along the curing toolpath to create a post-cured 3D-printed object.

In some exemplary embodiments, a device for post-curing a 3D-printed object is provided. a curing chamber formed by a body with a removable platform adapted to receive a 3D-printed part; one or more curing light assemblies coupled to the body and adapted to emit curing light onto the 3D-printed part; an airflow module for generating an airflow within the curing chamber; and a heating module adapted to control a temperature of the airflow, wherein the airflow module and heating module are configured to simultaneously: dissipate residual heat from the curing chamber and heat the airflow circulated within the curing chamber to facilitate curing the 3D-printed object.

In some exemplary embodiments, a method for post-curing a 3D-printed object is provided. The method may include providing the curing chamber with the curing light, circulating an airflow within the curing chamber, emitting a curing light onto the 3D-printed object, and, simultaneously, heating the airflow circulated within the curing chamber to facilitate curing the 3D-printed object and dissipating a residual heat from the curing chamber.

Various objects and advantages of the present invention will become apparent from the following description taken in conjunction with the accompanying drawings wherein are set forth, by way of illustration and example, certain embodiments of this invention. The drawings submitted herewith constitute a part of this specification, include exemplary embodiments of the present invention, and illustrate various objects and features thereof.

BRIEF DESCRIPTION OF DRAWINGS

Elements in the figures have not necessarily been drawn to scale in order to enhance their clarity and improve understanding of these various elements and embodiments of the present invention. Furthermore, elements that are known to be common and well understood to those in the industry are not depicted in order to provide a clear view of the various embodiments of the invention.

**FIG. 1** exemplarily illustrates a system for selectively post-curing a three-dimensional object to attain variable properties, according to an embodiment of the present invention.

**FIG. 2A** exemplarily illustrates a block diagram of a system for selectively post-curing a three-dimensional object to attain variable properties in communication with the database and 3-D scanner, according to an embodiment of the present invention.

**FIG. 2B** exemplarily illustrates a block diagram of a chamber for selectively post-curing a three-dimensional object, according to an embodiment of the present invention.

**FIG. 3** exemplarily illustrates a method for selectively post-curing a three-dimensional object to attain variable properties, according to practice of some embodiments of the present invention.

**FIG. 4A** exemplarily illustrates a perspective view of a post-curing chamber, according to an embodiment of the present invention.

**FIG. 4B** exemplarily illustrates a perspective view of a motion system and a light source assembly of the post-curing chamber, according to an embodiment of the present invention.

**FIG. 4C** exemplarily illustrates a top view of a motion system and a light source assembly of the post-curing chamber, according to an embodiment of the present invention.

**FIG. 4D** exemplarily illustrates a rear view of a motion system and a light source assembly of the post-curing chamber, according to an embodiment of the present invention.

**FIG. 4E** exemplarily illustrates a side view of a motion system and a light source assembly of the post-curing chamber, according to an embodiment of the present invention.

**FIG. 5** exemplarily illustrates an exploded view of the light source assembly, according to an embodiment of the present invention.

**FIG. 6** exemplarily illustrates a perspective view of thermal management system of the post-curing chamber, according to an embodiment of the present invention.

**FIG. 7** exemplarily illustrates a heating element arranged in the post-curing chamber, according to an embodiment of the present invention.

**FIG. 8** exemplarily illustrates an exploded view of the heating element of the post-curing chamber, according to an embodiment of the present invention.

**FIG. 9A** exemplarily illustrates a front view of the post curing chamber, according to an embodiment of the present invention.

**FIG. 9B** exemplarily illustrates a perspective view of the post curing chamber, according to an embodiment of the present invention.

**FIG. 9C** exemplarily illustrates a perspective view of the post curing chamber and the tray system, according to an embodiment of the present invention.

**FIG. 9D** exemplarily illustrates a side view of the post curing chamber and tray system, according to an embodiment of the present invention.

**FIG. 9E** exemplarily illustrates a front view of the post curing chamber, according to an embodiment of the present invention.

**FIG. 9F** exemplarily illustrates a top view of the post curing chamber and tray system, according to an embodiment of the present invention.

**FIG. 9G** exemplarily illustrates a perspective view of a front cover and panel of the post curing chamber, according to an embodiment of the present invention.

**FIG. 10** exemplarily illustrates a graph of radiation patterns for a post curing system, according to an embodiment of the present invention.

**FIG. 11** exemplarily illustrates a graph of radiation patterns for a post curing system, according to another embodiment of the present invention.

**FIG. 12** exemplarily illustrates a graph of relative intensity of light source of bottom and top panel, according to an embodiment of the present invention.

**FIG. 13** exemplarily illustrates a graph of energy absorption for a post curing system, according to an embodiment of the present invention.

**FIG. 14** exemplarily illustrates a graph for absorbance of UVC by e-coli bacteria, according to an embodiment of the present invention.

**FIG. 15** exemplarily illustrates a graph of UVC intensity of the post curing system, according to an embodiment of the present invention.

**FIG. 16** exemplarily illustrates a graph of UVC intensity of the post curing system, according to another embodiment of the present invention.

**FIG. 17** exemplarily illustrates a graph for thermal resistance and airflow temperature, according to an embodiment of the present invention.

**FIG. 18** is a graph showing relation between airflow and heat dissipation, according to an embodiment of the present invention.

**FIG. 19A** illustrates a block diagram of a device for post-curing a 3D object, according to exemplary embodiments of the present invention.

**FIG. 19B** illustrates an exemplary embodiment of a post-curing device.

**FIG. 20** illustrates an exploded view of an exemplary embodiment of a post-curing device.

**FIG. 21** illustrates a chassis assembly in an exemplary embodiment of a post-curing device.

**FIG. 22** illustrates an exploded view of a chassis assembly in an exemplary embodiment of a post-curing device and the detailed views at areas A, B.

**FIG. 23** illustrates the cross-sectional view at B-B in **FIG. 21** and a detailed view at area C.

**FIG. 24** illustrates a perspective view of the front cap and the front cover plate in an exemplary embodiment of a post-curing device.

**FIG. 25** illustrates an exploded view of the front cap and the front cover plate in an exemplary embodiment of a post-curing device.

**FIG. 26** illustrates another perspective view of the front cap and the front cover plate in an exemplary embodiment of a post-curing device

**FIG. 27** illustrates the cross-sectional view of the front cap and the front cover plate at C-C in **FIG. 24.**

**FIG. 28** illustrates a perspective view of the inner cap in an exemplary embodiment of a post-curing device.

**FIG. 29A** illustrates a front view of surface A of the inner cap in an exemplary embodiment of a post-curing device.

**FIG. 29B** illustrates a front view of surface B of the inner cap in an exemplary embodiment of a post-curing device.

**FIG. 30** illustrates an exploded view of the heater housing element and the heating element on the inner cap in an exemplary embodiment of a post-curing device.

**FIG. 31** illustrates an exploded view of the drawer in an exemplary embodiment of a post-curing device.

**FIG. 32** illustrates a top view of an exemplary drawer and a detailed view at its area D.

**FIG. 33** illustrates a sectional perspective view at A-A in **FIG. 19B.**

**FIG. 34** illustrates an exploded view of an exemplary front cap and the post-curing device.

**FIG. 35** illustrates a cross-sectional view at D-D in **FIG. 34.**

DESCRIPTION OF THE INVENTION

In the following discussion that addresses a number of embodiments and applications of the present invention, reference is made to the accompanying drawings that form a part thereof, where depictions are made, by way of illustration, of specific embodiments in which the invention may be practiced. It is to be understood that other embodiments may be utilized, and changes may be made without departing from the scope of the invention. Wherever possible, the same reference numbers are used in the drawings and the following description to refer to the same or similar elements.

In the following detailed description, numerous specific details are set forth by way of examples in order to provide a thorough understanding of the relevant teachings. However, it should be apparent to those skilled in the art that the present teachings may be practiced without such details. In other instances, well known structures, components and/or functional or structural relationship thereof, etc., have been described at a relatively high-level, without detail, in order to avoid unnecessarily obscuring aspects of the present teachings.

Throughout the specification and claims, terms may have nuanced meanings suggested or implied in context beyond an explicitly stated meaning. Likewise, the phrase "in one embodiment/example" as used herein does not necessarily refer to the same embodiment and the phrase "in another embodiment/example" as used herein does not necessarily refer to a different embodiment. It is intended, for example, that claimed subject matter include combinations of example embodiments in whole or in part.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and or steps. Thus, such conditional language is not generally intended to imply that features, elements and or steps are in any way required for one or more embodiments, whether these features, elements and or steps are included or are to be performed in any particular embodiment.

The terms "comprising," "including," "having," and the like are synonymous and are used inclusively, in an open-ended fashion, and do not exclude additional elements, features, acts, operations and so forth. Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require at least one of X, at least one of Y, and at least one of Z to each be present. The term "and or" means that "and" applies to some embodiments and "or" applies to some embodiments. Thus, A, B, and or C can be replaced with A, B, and C written in one sentence and A, B, or C written in another sentence. A, B, and or C means that some embodiments can include A and B, some embodiments can include A and C, some embodiments can include B and C, some embodiments can only include A, some embodiments can include only B, some embodiments can include only C, and some embodiments include A, B, and C. The term "and or" is used to avoid unnecessary redundancy. Similarly, terms, such as "a, an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

While exemplary embodiments of the disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions, and changes in the form of the methods and systems described herein may be made without departing from the spirit of the invention or inventions disclosed herein. Accordingly, the following detailed description does not limit the disclosure. Instead, the proper scope of the disclosure is defined by the appended claims.

As used in this disclosure, the term "comprise" and variations of the term, such as "comprising" and "comprises", are not intended to exclude other additives, components, integers or steps. For purpose of description herein, the terms "upper", "lower", "left", "right", "front", "rear", "horizontal", "vertical" and derivatives thereof shall relate to the invention as oriented in figures. However, it is to be understood that the invention may assume various alternative orientations and step sequences, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristic relating to the embodiments disclosed herein are not to be considered as limiting, unless the claims expressly state otherwise.

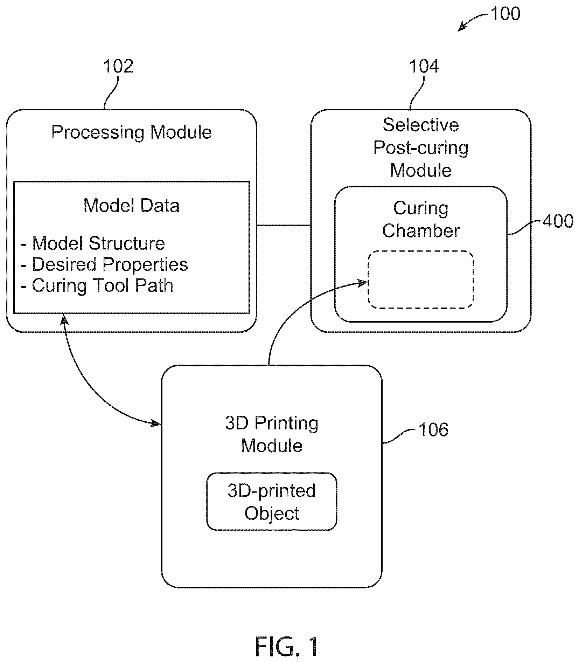

Turning now to the figures, **FIG. 1** is a block diagram for a system **100** in accordance with some exemplary embodiments of the present invention. More specifically, **FIG. 1** depicts system **100,** which typically includes a 3D printing module **106** configured to print 3D objects, a processing module **102** configured to determine or store model data concerning the 3D-printed object, including for example data concerning desirable properties of the 3D-printed object such as desirable variable properties that may be generated by curing the 3D-printed object, and data concerning a curing path for post-curing the 3D-printed object to achieve the desired variable properties. Moreover, system **100** includes a selective post-curing module **104,** which is configured to cure the 3D-printed object after the 3D-printed object has been printed.

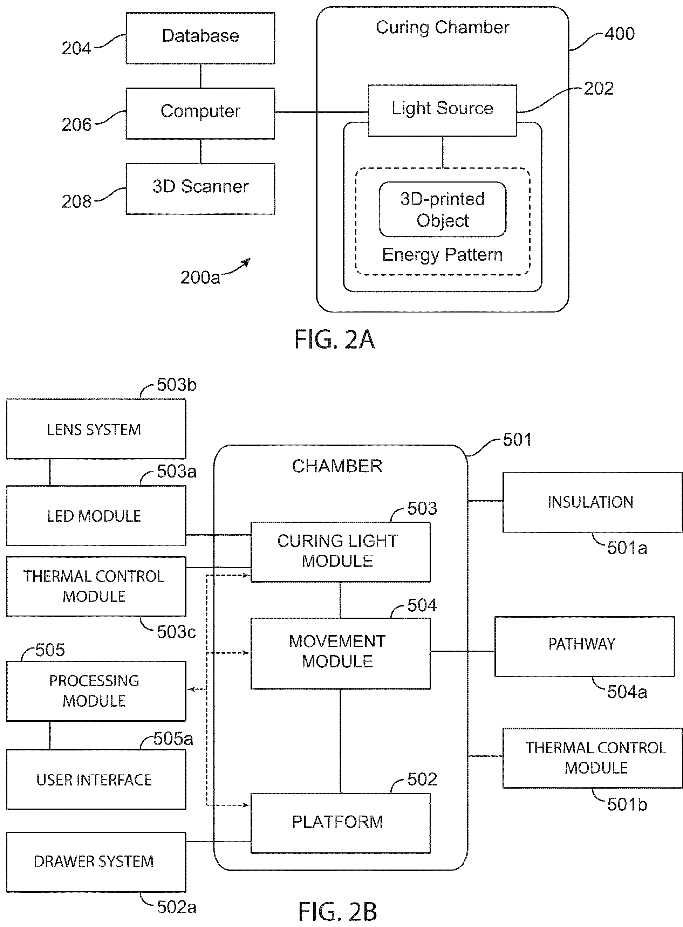

The processing module **102** typically receives data concerning the 3D-printed object and may be configured to determine a curing toolpath configured to achieve a post-cured 3D-printed object having variable properties along different regions of the 3D-printed object. This may be performed in any number of ways, including for example by incorporating a 3-D scanner **208,** shown in **FIG. 2,** that scans the object to receive data for post-curing. In other embodiments, the data may be loaded onto the processing module **102** directly from a database **204,** shown in **FIG. 2,** that was used to fabricate the 3D-printed object. The model data may include, without limitation, data concerning the structure of the 3D-printed object, as well as desired properties subject of the post-curing process. The desired or target variable properties for the post-curing 3D-printed object may include, without limitation, a variable color shade, a variable opacity, variable flexural strengths, variable modulus, or other variable material properties that may be achieved via post-curing means. For example, variable color shades are ideal for multicolor dental restorations such as crowns and bridges. Similarly, variable opacity may be ideal for multicolor dental restorations such as crowns and bridges. Furthermore, variable material properties such as various flexural strengths and modulus may be ideal for dental appliances such as orthodontic appliances, including - for example and without limiting the scope of the present invention - aligners and retainers as well as occlusal guards and splints. Typically, the processing module **102** controls components of the selective post-curing module **104,** which as will be discussed below, is configured to create a post-cured 3D-printed object having the target variable properties.

The selective post-curing module **104** typically includes a selective post-curing chamber **400** (hereinafter, also referred as chamber **400**) with a light source configured to generate a powerful laser for the post-curing process. The chamber **400** may include a mounting platform for mounting the 3D-printed object once it comes out of the printing process from the 3D-printing module **106.** In exemplary embodiments, the light source may include a projector mounted on a track that is configured to revolve around a mount within the chamber in which the 3D-printed object is mounted. In this way, once the geometry of the 3D-printed object or part that needs to be cured is out or ready from the 3D-printing module **106,** the pattern of energy will be projected onto the 3D-printed object using the projector equipped with the adequate wavelengths and energy amounts.

The 3D-printing module **106** may include any number of components such as those that may be necessary or useful for stereolithography additive manufacturing techniques. In exemplary embodiments, a database of the 3D-printing module **106** may communicate with the processing module **102** of the present invention in order to provide the data for the curing toolpath.

Accordingly, in some exemplary embodiments, a system **100** for selectively post-curing a 3D-printed object to attain variable properties may include: a processing module **102** for receiving data concerning the 3D-printed object and determining a curing toolpath configured to achieve a post-cured 3D-printed object having variable properties along different regions of the 3D-printed object; and a selective post-curing module **104,** including a chamber with a light source configured to house the 3D-printed object and selectively emitting a curing light onto the 3D-printed object. In some exemplary embodiments, processing module **102** receives data concerning the 3D-printed object, which includes a predetermined curing toolpath configured to achieve a post-cured 3D-printed object having variable properties along different regions of the 3D-printed object. In some exemplary embodiments, a user interface in communication with the module **104** enables a user to select the type of 3D-printed object placed in the curing camber of the **400;** the processing module will access data concerning the 3D-printed object based on the user-selection, the data including a predetermined curing toolpath for the 3D-printed object, wherein the toolpath is configured to post-cure the 3D-printed object into a post-cured 3D-printed object having variable properties along different regions of the post-cured 3D-printed object. As will be explained in more detailed below, post-curing the post-cured 3D-printed object with variable properties along different regions of the post-cured 3D-printed object may be achieved by a movable light source assembly inside chamber **400.**

In exemplary embodiments, the movable light source assembly may be configured to emit curing light at multiple wavelengths and at variable positions along a movement track about a platform within the chamber **400,** such that the movable light source assembly emits curing light at one or more wavelengths onto a 3D-printed object along a predetermined toolpath associated with the 3D-printed object. The wavelength of the curing light emitted onto the object may be variable; as such, a variable energy pattern may be emitted onto the 3D-printed object along the toolpath in accordance with a target physical property at a given position along the toolpath; in this way, the post-cured 3D-printed may have - by way of example and without limitation - a variable color shade, a variable opacity, a variable flexural strength, a variable elasticity, a variable modulus, or other variable material properties along the predetermined toolpath.

Turning now to the next figure, **FIG. 2A** illustrates an exemplary system **200a** in accordance with some embodiments of the present invention. More specifically, **FIG. 2A** depicts system **200,** which generally includes a selective post-curing chamber **400** adapted to receive a 3D-printed object, a post-curing light source or movable light source assembly **202** (that may include, for example an LED module) housed in the chamber **400,** and a computer **206** coupled to the movable light source assembly **202** including one or more executable instructions for selectively emitting a curing light onto the 3D-printed object along a predetermined curing toolpath based on data of the 3D-printed object.

The chamber **400** may be any suitable curing chamber for curing 3D-printed objects. The chamber **400** is typically adapted to house a 3D-printed object that can be secured to an interior of the chamber **400** via a mounting platform or mount suitable for holding the 3D-object in place during the curing process. In some exemplary embodiments, a track or path may be provided around the mounting platform for the 3D-printed object, in order to facilitate a rotation or revolution of the movable light source assembly 202 around the 3D-printed object during the post-curing process.

The computer **206** is generally coupled to or in communication with the movable light source assembly **202** and configured with one or more executable instructions for selectively emitting a curing light onto the 3D-printed object along a predetermined curing toolpath based on data of the 3D-printed object, wherein curing the 3D-printed object along the predetermined curing toolpath generates variable properties along different regions of the 3D-printed object. To obtain the data, as mentioned above, the computer **206** may be coupled to or in communication with a database **204,** such as a database of a 3D-printing module, or alternatively, or optionally, the computer **206** may be coupled to a 3D scanner **208** that implements 3D scanning technologies in order to derive data concerning the 3D-printed object.

In exemplary embodiments, the computer **206** includes one or more executable instructions for: receiving data concerning a 3D-printed object; determining a curing toolpath configured to achieve a post-cured 3D-printed object having variable properties along different regions of the 3D-printed object; and selectively emitting a curing light onto the 3D-printed object along the curing toolpath, wherein curing the 3D-printed object along the curing toolpath generates the variable properties along the different regions of the 3D-printed object. In some exemplary embodiments, computer **206** includes a user interface (i.e., a keyboard, a touch interface, a keypad, etc.) that enables a user to select the type of 3D-printed object placed in the curing camber of the **400;** the computer will access data concerning the 3D-printed object (i.e., from scanner **208** or database **204**) based on the user-selection, the data including a predetermined curing toolpath for the 3D-printed object, wherein the toolpath is configured to post-cure the 3D-printed object into a post-cured 3D-printed object having variable properties along different regions of the post-cured 3D-printed object.

**FIG. 2B** exemplarily illustrates a block diagram of a chamber for selectively post-curing a three-dimensional object, according to an embodiment of the present invention. More specifically, **FIG. 2B** depicts exemplary system **500** for system for selectively post-curing a 3D-printed object to attain one or more variable properties; system **500** may include the same general components of system **200** as illustrated in **FIG. 2A,** but may particularly include: a chamber **501;** a platform **502** arranged within the chamber **501** for supporting at least one 3D-printed object thereon; a curing light module **503** such as a light source assembly arranged within the chamber **501** and configured to emit one or more wavelengths of a curing light onto the 3D-printed object; a movement module **504** configured to move the curing light module **503** or the platform **502** in order to selectively expose different regions of the 3D-pritned object to the curing light along a predetermined curing toolpath of the 3D-printed object; and a processing module **505,** which is in communication with the curing light module **503** and the movement module **504,** the processing module **505** including one or more executable instructions configured to: receive a user input, via a user interface **505a** coupled to the processing module **505,** the user input concerning the 3D-printed object and indicative of the predetermined curing toolpath for post-curing the 3D-printed object; move the curing light module **503** or the platform **502** according to the curing toolpath; and emit the curing light onto the 3D-printed object along the curing toolpath to create a post-cured 3D-printed object.

Chamber **501** may be constructed of various materials, although typically a construction employs a design that provides insulation **501a,** such as for example, insulation layers of insulating materials, as well as a multiple encasing construction that facilitates conservation of a desired temperature within the chamber but prevents excessive heat exposure to an outside of the chamber so as to protect the user. In exemplary embodiments, the chamber comprises an interior surface finish adapted to maximize a reflectance for ultraviolet light. In exemplary embodiments, in addition to insultation **501a,** chamber **501** may include a thermal control module **501b** such as a heating device that may be situated below the platform **502** to expose the 3D-printed objects inside chamber **501** to a desired temperature suitable for the post-curing process.

Platform **502** may be any platform suitable for exposure to curing light from curing light module **503,** such as ultraviolet light, and suitable for supporting one or more (and preferably although not necessarily) multiple 3D-printed objects within the chamber **501.** In exemplary embodiments, the platform may be stationary when chamber **501** is active but may be movable to facilitate removal and insertion of the objects into and out of the chamber. In some exemplary embodiments, the platform **502** may be a movable platform such as a rotating platform - for example a turntable platform. In some exemplary embodiments, the platform may be a movable platform that is capable of tilting or performing other movements in order to facilitate adequate exposure of the 3D-printed objects to the curing light from the curing light module **503.** In some exemplary embodiments, platform **502** is a simple stationary platform situated inside the chamber **501** in a manner such as to adequately expose a 3D-printed objects to a curing light from the curing light module **503.** In exemplary embodiments, in order to facilitate movement of the platform in and outside of the chamber **501,** a drawer system **502a** may be employed; such drawer system is discussed below with reference to other figures. In exemplary embodiments, the platform **502** includes a surface adapted to receive the 3D-printed object, the surface including: a mesh, or a material made of at least one of an ultraviolet C transparent material and an ultraviolet A transparent material.

Curing light module **503** may be any light source or light source assembly equipped with a light source suitable for post-curing 3D-printed objects. In some exemplary embodiments, the light source assembly includes at least one light source disposed above the platform and at least one light source disposed below the platform to maximize exposure to various portions of the 3D-printed object. In some exemplary embodiments, the curing light module **503** comprises a Light Emitting Diode (LED) module **503a** for emitting the one or more wavelengths of the curing light onto the 3D-printed object. LED module **503a** may be comprised of multiple LED panels, and in some exemplary embodiments, LED module **503a** includes at least one LED panel disposed above the platform **502** and at least one LED panel disposed below the platform **502.** In order to control a desired temperature inside the chamber **501** and also to keep optimal performance of LED module **503a,** in some exemplary embodiments, LED module **503a** or curing light module **503** may include a thermal control module **503c** built into a structure or light assembly of the module; this may include a fan system to actively control a temperature of the chamber and also of light source components of the curing light module **503.** In some exemplary embodiments, the curing light module **503** comprises a lens system for volume coverage of the 3D printed object, the lens system including one or more convex lens adapted to move relative to the light source assembly for changing a volume coverage area of the 3D-printed object.

Movement module **504** may be any set of components that are suitable for facilitating movement of curing light module **503** or platform **502.** For example, and without limiting the scope of the present invention, movement module **504** may comprise a movement system for platform **501,** such as a motor, actuator or device that moves platform **502.** In some exemplary embodiments, a motor of the movement module may be configured to rotate a turntable coupled to the platform. In some exemplary embodiments, a motor, actuator or device may be configured to raise and lower the platform **502.** In some exemplary embodiments, movement module **504** may comprise a movement system for curing light module **503,** such as a motor, actuator or device that moves one or more devices of the curing light module **503;** in some exemplary embodiments, this may involve a motor coupled to a pathway **504a,** such as a track, including a linear track, that enables movement of a light assembly along the pathway inside the chamber. As will be discussed in more detail below, other configurations are also possible - for example, and without limiting the scope of the present invention - movement module **504** may comprise of motors, actuators or devices that move both platform **502** and curing light module **503.** In exemplary embodiments, the movement module is adapted to facilitate at least one of continuous motion, motion having multiple stationary points, or bidirectional motion of the curing light module **503** or the platform **502.** In some exemplary embodiments, a position sensor may be included in the movement module for determining a position of a light source of the curing light module **503** or the platform **502.**

Processing module **505** may be any suitable computing device that is configurable or programmable with one or more executable instructions configured to activate the various components of chamber **501.** Generally, processing module 505 is configured to at least receive a user input, via a user interface **505a** coupled to the processing module **505,** the user input concerning the 3D-printed object and indicative of the predetermined curing toolpath for post-curing the 3D-printed object; move the curing light module **503** or the platform **502** according to the curing toolpath; and emit the curing light onto the 3D-printed object along the curing toolpath to create a post-cured 3D-printed object. In some exemplary embodiments, a database in communication with the processing module that stores information about the 3D-printed object.

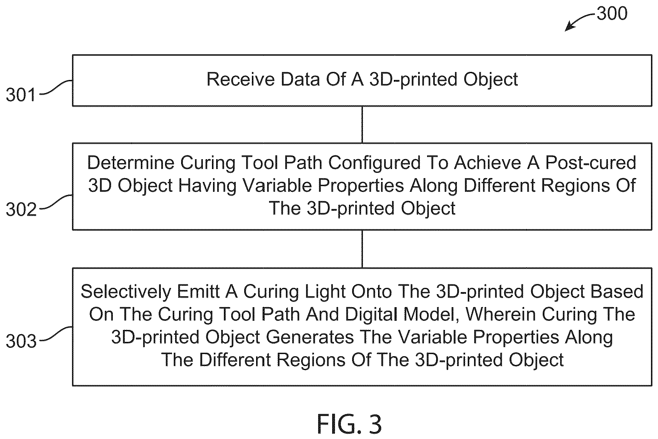

Turning now to the next figure, **FIG. 3** depicts a flow chart of a method in accordance with some exemplary embodiments of the present invention. More specifically, **FIG. 3** depicts method **300** for selectively post-curing a 3D-printed object to attain variable properties. Although presented in a particular sequence, method **300** may be achieved in alternative sequences with optional steps, without deviating from or limiting the scope of the present invention. Generally, method **300** comprises the steps of: **301** receiving data concerning a 3D-printed object; **302** determining a curing toolpath configured to achieve a post-cured 3D-printed object having variable properties along different regions of the post-cured 3D-printed object; and **303** selectively emitting a curing light onto the 3D-printed object along the curing toolpath, wherein curing the 3D-printed object along the curing toolpath generates the variable properties along the different regions of the 3D-printed object.

In step **301**, data concerning a 3D-printed object may be received. This may include receiving the data from a database or receiving the data from a 3D-scanner coupled to a system in accordance with the present invention. The data may be compiled by generating a digital model of the 3D-printed object that divides the 3D-printed object as a number of volumes, wherein each of the divided volumes include a corresponding curing position along the toolpath.

In step **302**, a curing toolpath configured to achieve a post-cured 3D-printed object having variable properties along different regions of the 3D-printed object may be determined. In exemplary embodiments, this may be performed by the computer of the system. However, this step may be performed externally to the system and the system may instead be configured to receive the data, which includes the desired curing toolpath.

In step **303**, the computer communicates with the light source and a curing light is selectively emitted onto the 3D-printed object in accordance with the curing toolpath and the digital model, wherein curing the 3D-printed object along the curing toolpath generates the variable properties along the different regions of the 3D-printed object.

In some exemplary embodiments, a method for selectively post-curing a 3D-printed object to attain variable properties may include the steps of: mounting a 3D-printed object in a selective post-curing chamber including a post-curing light source configured to emit a curing light onto the 3D-printed object; receiving data of the 3D-printed object concerning a curing toolpath and digital model of three-dimensional printed object; and selectively emitting a curing light onto the 3D-printed object along the curing toolpath based on the model data, wherein curing the 3D-printed object along the curing toolpath generates variable properties along different regions of the 3D-printed object.

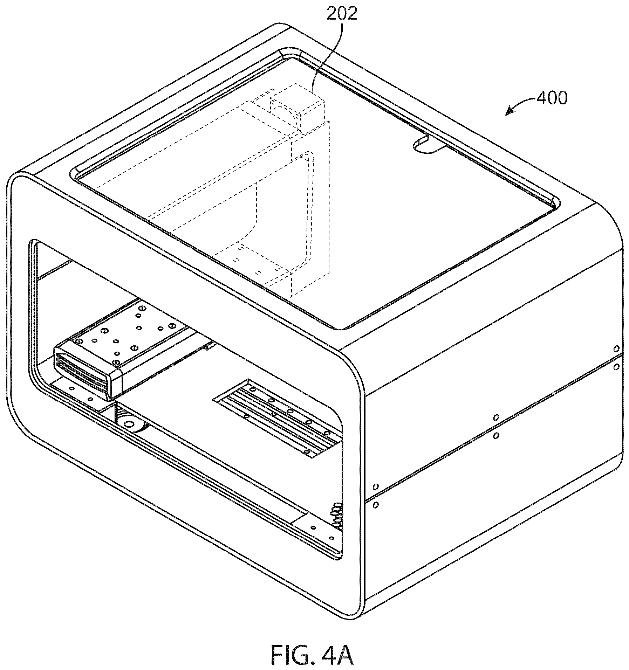

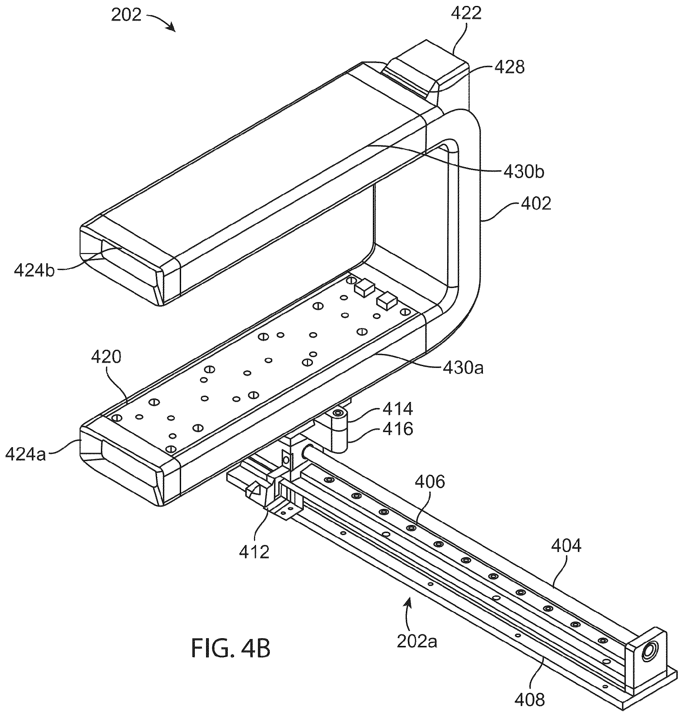

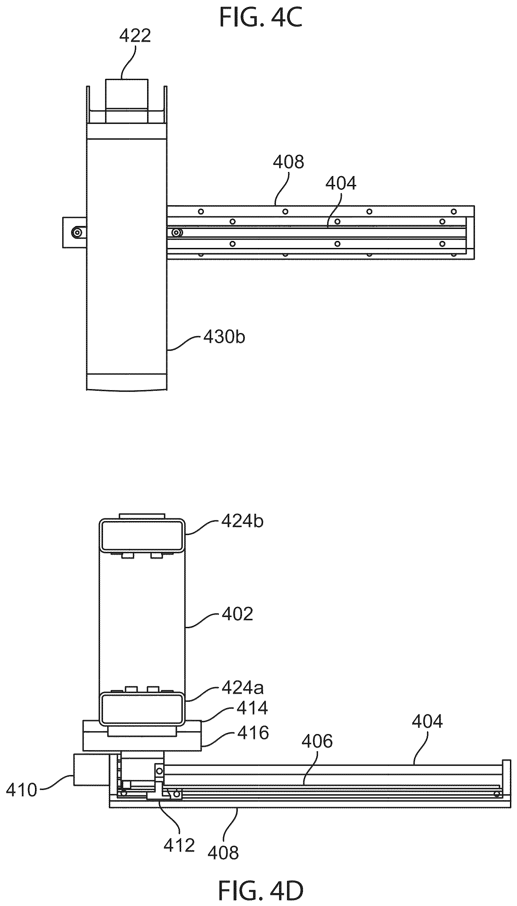

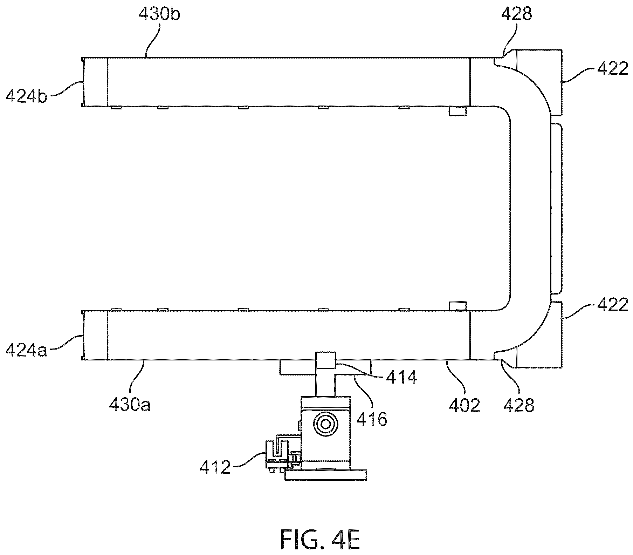

**FIG. 4A** exemplarily illustrates a perspective view of the chamber **400**, according to an embodiment of the present invention. The chamber **400** houses a post curing light source or movable light source assembly and a motion system, which will be discussed below with reference to other figures. **FIG. 4B** through **FIG. 4E** illustrate different views of the movable light source assembly that sits on a motion system within chamber **400** in accordance with an exemplary embodiment of the present invention. The post curing system is configured to provide maximum irradiation, or volume coverage, of UVA light on the 3D-printed part surface by using the motion system.

More specifically, **FIG. 4A** depicts movable light source assembly **202** situated inside chamber **400**. **FIG. 4B** - **FIG. 4E** depicts the movable light source assembly **202** in isometric view with several components: a bottom LED module including a bottom panel casing **430a** and a top LED module including a top panel casing **430b**, an LED casing connecting bracket **402**, and a motion system **202a**, which in some embodiments is a linear motion system.

In some exemplary embodiments, the movable light source assembly **202** may be couped to linear motion system **202a** by way of a mounting bracket **414** coupled between the movable light source assembly **202** and linear motion system **202a**, and a connecting bracket **416** that couples the mounting bracket **414** to a portion of the linear motion system **202a** such as a track (or for example, a lead screw **404**). Linear motion system **202a** may comprise of a high accuracy stepper motor **410** (see **FIG. 4D**, for example), a lead screw **404**, a linear guide **406**, a linear guide mounting plate **408** and a position sensor **412**. The high-power LED modules may be held together by the bracket **402**, which is connected to the motion system **202a** for linear guidance - or so that the movable light source assembly **202** may be positioned along a track of the motion system **202a**. A cable track may be used to enable one dimensional freedom for the power cables.

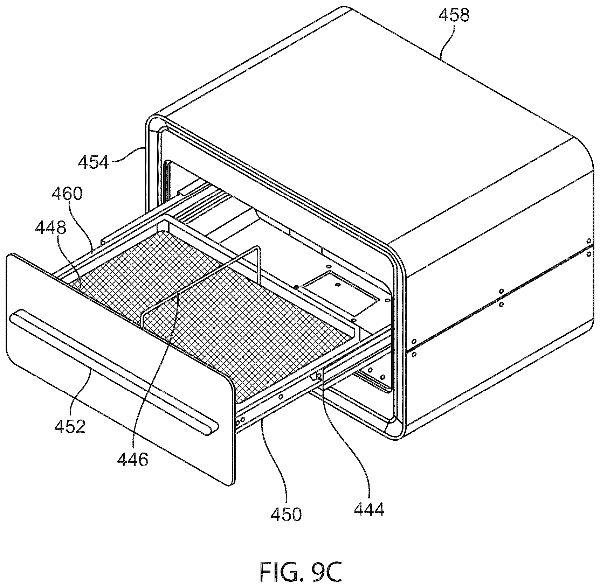

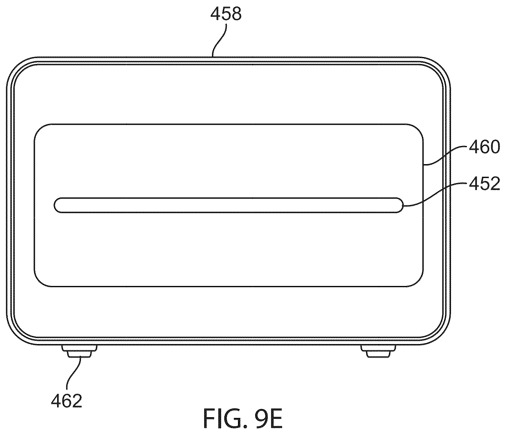

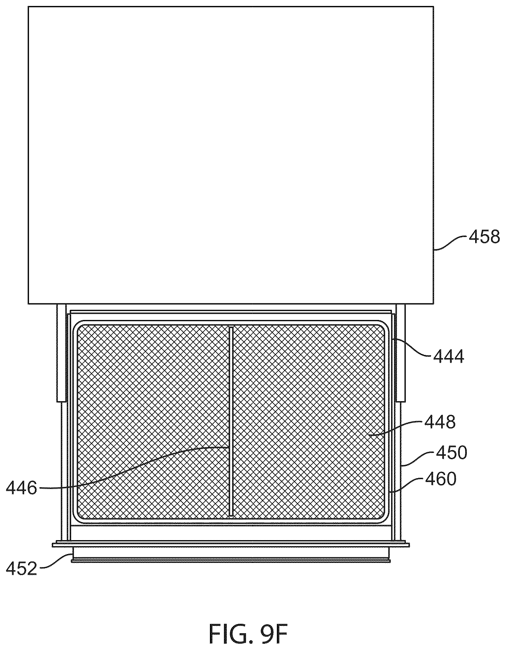

The LED module may include uniform light intensity along the X axis and the linear motion system creates motion along the Y axis to increase the volume coverage. The motion can be either a continuous motion or have multiple stationary points. The length of the movement may be divided into different zones according to the number of models present for curing and, in some embodiments, may be indicated on a mounting platform such as a tray holder **444**, shown in **FIG. 9C**, for a user's reference.

In another exemplary embodiment of the present invention, the post curing system may contain a movement system for volume coverage achieved by linear uniaxial motion in the X or Y axis. The volume coverage may alternatively be achieved by implementing a rotational motion. The LED module and bracket system are connected to the motor system to create rotational motion. The LEDs uniformly irradiate the radial direction, and the rotational motion covers the entire platform area. Alternatively, volume coverage may be achieved by fixed light source and a moving platform. For the linear movement system, it may be achieved by moving the platform in the X or Y axis. The volume coverage may also be achieved by implementing a turntable, where the light source is fixed but the platform moves. Another alternative for volume coverage is bidirectional motion. This involves combining motion in the X and Y axis.

In another exemplary embodiment of the present invention, the volume coverage may alternatively be achieved by tilting a light source. The system may include a high optical power light source which is rotated about an axis, which is either on the light source or away from it. The distance from the axis determines the optical output required from the panel.

In another exemplary embodiment of the present invention, a desirable volume coverage may be achieved by use of a convex lens system. The system may include a high-power LED source accompanied by a convex lens. The optical output from the high-power LED source passes through the convex lens. The lens is moved closer or further away from the source to change the coverage area. In another exemplary embodiment, the light source is moved relative to the lens.

In exemplary embodiments, the LED module or modules may be adapted to using multiple wavelengths of light in different combinations to give the 3D-printed objects varying desired physical properties. For example, and without limiting the scope of the present invention, multiple curing wavelength may involve UVA+UVC, or other combinations to selectively enhance the properties of the 3D-printed parts being cured within chamber **400.**

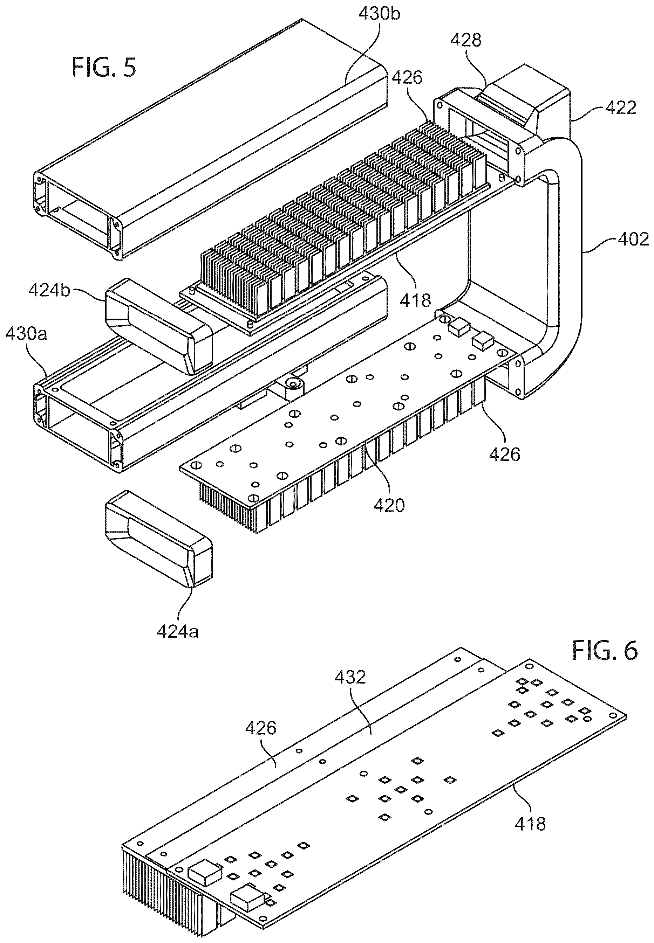

**FIG. 5** exemplarily illustrates an exploded view of the light source assembly, according to an embodiment of the present invention. The light source assembly consists of a top LED panel casing **430b** and bottom LED panel casing **430a,** which house LED panels 418 and 420, respectively, including heat sinks **426.** The bottom LED panel casing **430a** houses the bottom LED panel **420** and the top LED panel casing **430b** houses the top LED panel **418.** Each casing is designed to accommodate the heat sink **426** between the wall of the casing **(430a, 430b)** and respective heat sink **426** which ensures that an airflow is directed through the heat sink by way of a fan system (for example, and without limitation, fans **422**) that facilitates the airflow. The transition from the circular cross section of the fan to the rectangular cross section of the duct is enabled using a fan mounting spacer **428** which may be designed with smooth surfaces and gradual transition and the fan **422** may be centered with the duct to reduce pressure drop, eliminating vortex formation and removing zones for pressure drops. Openings at each terminal end of each casing may form a duct that may include caps **(424a, 424b)** to prevent exposure to the heat sink. Each cap **(424a, 424b)** may include an opening on the sides and perforations on the top to further facilitate airflow. The total area of openings through these is equal to the cross-sectional area of the duct, to reduce pressure drop. The fan **422** orientation can be either a high static pressure fan, or multiple fans in series to generate high static pressure than single fan at similar flow rate of single fan or multiple fans in parallel to generate same static pressure as single fan but with a higher flow rate.

**FIG. 6** exemplarily illustrates an exploded view of an LED module (in this case the top LED module that is secured or housed within top panel casing **430b)** in accordance with the present invention, which employs a thermal management system, as will be discussed further below. The LED module includes a plurality of LEDs disposed on a surface of the LED panel **418,** thermal pad **432,** and a heat sink **426.** A bottom LED module may include a similar mirrored configurations of LED panel, thermal pad, and a heat sink.

Because some of the photopolymers to be post cured within chamber **400** may require an ambient temperature of 60 Celsius, air inside the chamber may need to be heated. On the other hand, the UVA LEDs typically have an operating efficiency of 59% and may generate waste heat of 48 Watt for the top panel and 19 Watt for the bottom panel, with a potential maximum junction temperature for a UVA LED 90 Celsius and for UVC LED 100 Celsius. Thus, there is also a need to cool down the LED panel. To address these factors, in exemplary embodiments, a cooling system for LEDs may include several components: heat sink **426,** thermal pad **432,** and cooling fan **422** - all housed within each of the LED panel casing **430** that facilitates air circulation between the top and bottom LED panels. In some exemplary embodiments, the size of the top LED panel **418** and the bottom LED panel **420** may be 224 mm by 60 mm. A single layer aluminum PCB may be used to make the LED panel. This helps decrease the thermal resistance from the board and provides a large surface area for the heat to transfer. The ambient temperature in the chamber **400** may be preferably at 60 Celsius and the LED junction temperature may be preferably below 80 Celsius, which gives a delta T of 20 C. The heat output from the panel may be 48 Watt, hence the maximum thermal resistance for the system is preferably below .42C/W, which is calculated by using Formula (**7**) and Formula (**8**):

$$\text{Thermal resistance} = \text{Desired delta T} \div \text{Heat Output} \qquad \text{(Formula (7))},$$

$$Q = hc \ A \ (Ts\text{-}Ta) \qquad \text{(Formula (8))},$$

where Q is the rate of heat transfer; hc is the convection heat transfer coefficient; A is surface area for heat transfer; Ts is the surface temperature of heat sink; and Ta is the air temperature.

In exemplary embodiments, chamber **400** may employ specific materials to maximize a reflectance for the UV light output from movable light source assembly **202.** For example, and without limiting the scope of the present invention, the materials may include Aluminum, Stainless Steel or Teflon (Porex). In some exemplary embodiments, chamber **400** may employ a surface finish to maximize the reflection. For example, and without limiting the scope of the present invention, the surface finish may include enhanced Aluminum, and or titanium oxide coating. Of course, other materials and or combination of materials may be employed in order to improve or maximize a desired reflectance for the UV light output from movable light source assembly **202.** Accordingly, in exemplary embodiments, camber **400** comprises a surface finish to maximize the reflection.

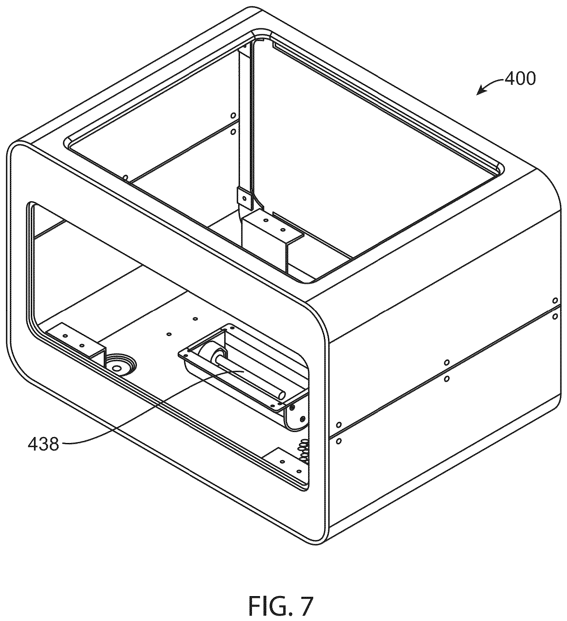

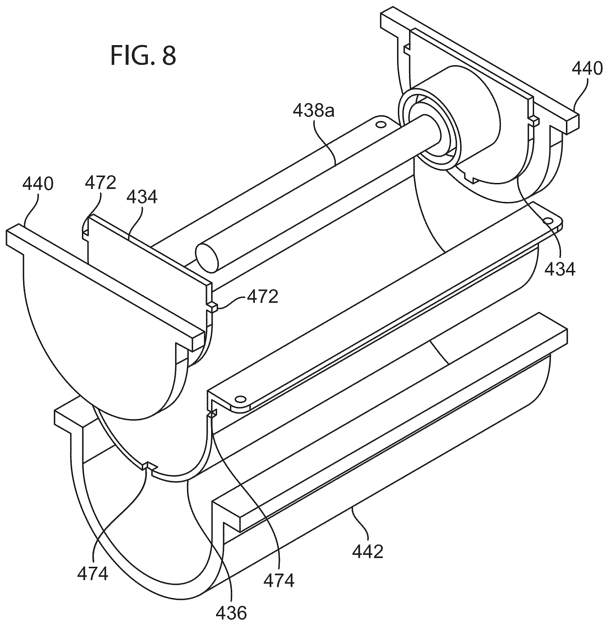

**FIG. 7** exemplarily illustrates a heating device arranged in the chamber **400,** according to an embodiment of the present invention. **FIG. 8** exemplarily illustrates an exploded view of the heating device of the chamber **400,** according to an embodiment of the present invention, which reaches a desirable temperature for curing certain photopolymers.

The heating device **438** includes a heating element **438a** configured to transfer heat energy to the air in the least amount of time. Heating device **438** may be an electric heater employing a heating element that outputs heat distributed in two parts. The first part may be responsible for heating the heating element and the second part may be responsible for transferring heat to the air inside the chamber. In exemplary embodiments, heating element **438a** may be adapted to have minimum thermal lag, i.e., reaching an operating temperature in minimum amount of time. The thermal lag depends on the mass and the specific heat of the material used in heating device **438.** In some exemplary embodiments, an outer shell ma be made of stainless steel which under high temperature forms a layer of $Cr_2O_3$ that resists further oxidation of the heating element. In some exemplary embodiments, a resistive wire my be used; for example a nichrome ire capable of withstanding high temperature may be covered by a sheath of MgO that acts as an electrical insulator. In some embodiments, the heating device may use metal ceramic elements. In some embodiments, heating element **438a** is a bare nichrome wire. In some embodiments, heating element **438a** is a nichrome wire in a metal casing. In some embodiments, heating device **438** includes resistive nichrome wires infused in aceramic casing. The heating element preferably has very low oxidation; to these ends, a ceramic surface may be employed.

**FIG. 8** illustrates an exemplary embodiment of the present invention in which the heating element **438a** attains high surface temperature, in excess of 418 Celsius. The heating element **438a** needs to be isolated from the user because of the high temperature. The heater housing **436** has been designed to contain and redirect the airflow into the chamber **400.** The housing has an insulation (**440** and **442**) wrap on the exterior. One side of the heater housing has a threaded mounting hole. The heater is screwed into the hole. The side panels **434** of the heater housing has tabs **472** on its sides which fits into the grooves **474** in the heater housing **436** disposed at the bottom portion. The side panels **434** have spacers to ensure that the side insulation **440** does not get pressed during the assembly. The heater housing is positioned on the bottom of the chamber **400** to facilitate natural convection. The heater housing is covered by protective mesh, the size of mesh is to maximize the airflow. In some exemplary embodiments, a sheet metal may be used to offer little resistance to transfer of heat from inside the product to outside.

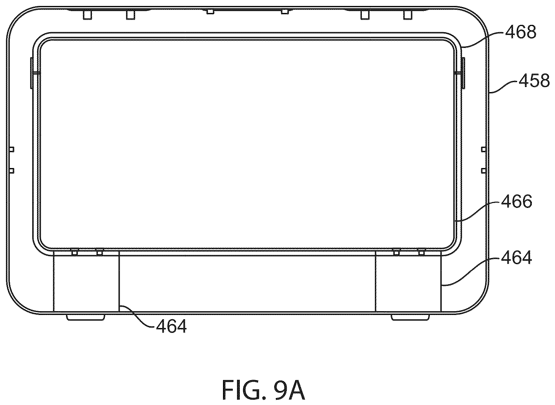

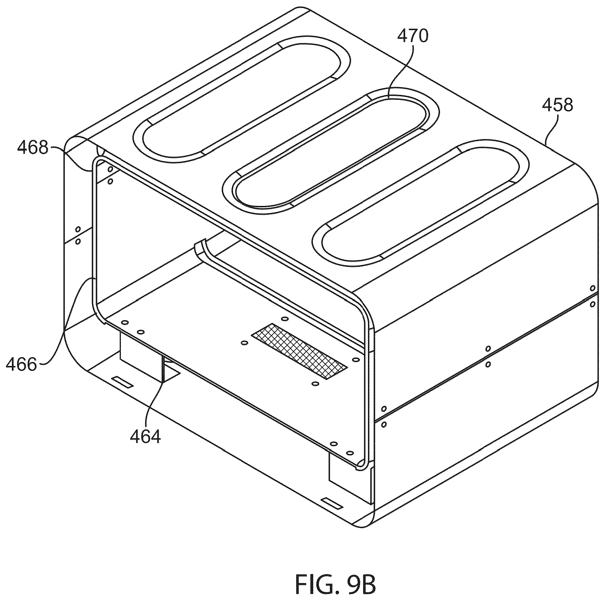

Turning now to the next set of figures, **FIG. 9A** through **FIG. 9G** illustrate perspective views of a post curing system in accordance with an exemplary embodiment of the present invention. More specifically, **FIG. 9A** and **FIG. 9B** show a front view and an isometric view, respectively, of an exemplary embodiment of a post curing system. Due to the large surface area, the chamber acts like a heat sink and dissipates heat away. To further reduce heat waste, a layer of insulation **468** may be added to the outer wall of the inner enclosure **466** (see **FIG. 9A - 9B,** for example). The insulation layer **468** may be characterized by an R value which describes the temperature difference across the insulation for a unit heat flux. The requirement for the chamber may be that the external enclosure temperature stays below 37 Celsius, the body temperature. Another attribute required of the insulation may be to have a flame rating of 0 or 1 according to NFPA.

As the chamber heats up air to higher temperatures, the enclosure may become hot and dangerous to handle. To solve this issue, the chamber may employ two sections. An inner section formed by inner enclosure **466** that encloses the LED module and the heating device; this section heats up during the operation to a temperature of 60 Celsius. And an outer section formed by an outer enclosure **458** may include an insulation material to contain the heat; the insulation material selected has R value such that the temperature on the outer chamber **458** is reduced to below 37 Celsius, which is the body temperature. This prevents exposure to hot bodies for the user. The inner enclosure **466** may be coupled to the outer enclosure **458** by way of one or more supports **464** that secure the inner enclosure within an interior region of the outer enclosure **458,** leaving a space between the outer enclosure **458** and inner enclosure **466.** As may be appreciated from the view of **FIG. 9B,** the outer enclosure **458** may optionally include one or more LCD cutouts **470** disposed over the top surface of the outer enclosure **458** for displaying one or more indication lights to the user indicative of a status of the device or post-curing process. In some exemplary embodiments, the top surface of outer enclosure **458** is smooth and excludes the LCD cutouts (see for example **FIG. 9C**).

**FIG. 9C** through **FIG. 9F** show perspective views of a drawer system in accordance with an exemplary embodiment of the present invention. In some exemplary embodiments, chamber **400** may employ a drawer system that facilitates access to a platform such as a mounting platform for mounting or positioning 3D-printed objects within chamber **400.** In exemplary embodiments, the drawer system is aimed at maximizing a usable area while minimizing the overall footprint. The drawer system may employ a push to close design which locks at the close position.

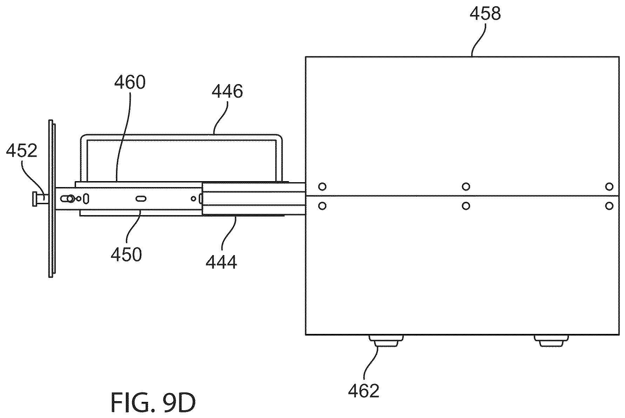

In some exemplary embodiments, the drawer system comprises a front cover **454** that may be made of a UV blocking material. The drawer design may implement an opening height to restrict the height of the model to a maximum permissible height. This ensures no contact between the LED panels (**418, 420** inside chamber **400**) and the 3D-printed object situated within a platform (such as a tray) of the drawer system. The drawer system may employ a magnetic sensor to detect the state of the drawer, which offers a safety switch that switches off the heater device and the UV LEDs when the drawer is opened. In exemplary embodiments, the drawer system comprises: a drawer **460,** which includes a door with a handle **452,** a front cover **454** and front panel **456** that provide UV shielding around the opening into the chamber **400,** and a tray system including a tray holder **444** that sits within a portion of drawer **460,** a tray handle **446** and a tray mesh **448.** The drawer system enables a platform, such as tray or tray mesh **448,** to entirely slide out of chamber **400.** The tray mesh **448** may be placed on tray holder **444** which is connected to a drawer slider **450.** The tray handle **446** enables the user to lift the tray to add convenience while placing the 3d-printed objects or modes onto the platform or tray mesh **448.** In exemplary embodiments, such as the one shown in these views, includes a platform configured to enable exposure to curing light from above as well as from underneath the platform. For example, and without limiting the scope of the present invention, tray mesh **448** may comprise a plurality of openings that facilitate exposure to UV light from the bottom or below the 3D-printed objects that are disposed on tray mesh **448.** In some exemplary embodiments, a UVC and UVA transparent material may be used to form the base of the platform. In some exemplary embodiments, tray mesh **448** has a large open area to total area percentage of 58%. As can be appreciated from **FIG. 9D,** supports **462,** such as frictional supports that may include, without limitation, rubber feet, may be utilized as a support mechanism that prevents the outer enclosure from sliding or moving during use.

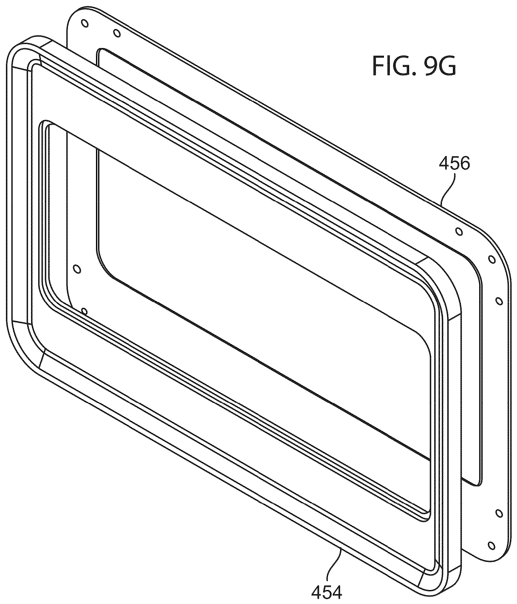

**FIG. 9G** shows an isometric view of a front panel in accordance with an exemplary embodiment of the present invention. In exemplary embodiments, the front cover **454** is modular; it may be coupled to the front panel using location pins to constraint the movement parallel to the front panel **456** and magnets to constraint movement perpendicular to the front panel **456.** Alternatively, fasteners can be used to make the front cover accessible. This enables the user to disassemble the front cover **454** and perform cleaning operations on the part.

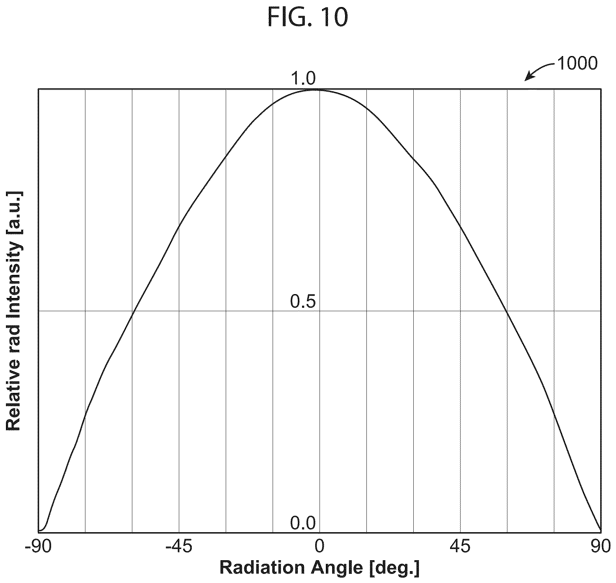

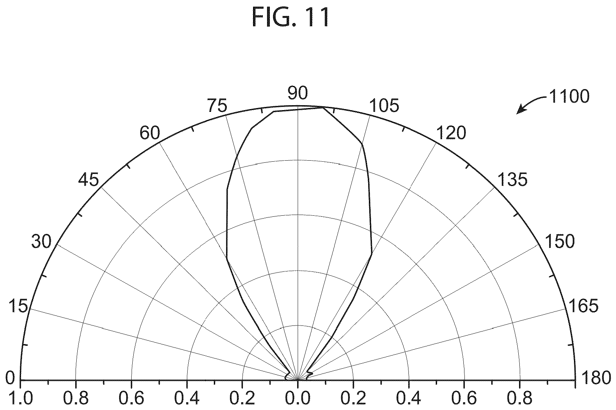

**FIG. 10** and **FIG. 11** illustrate graphs **(1000, 1100)** of radiation patterns for a post curing system in accordance with an exemplary embodiment of the present invention. In the exemplary embodiment, the post curing system provides uniform curing using two factors that result in different intensities and different points on the trays: the light source and the light intensity. The light source, UV LEDs have a characteristic radiation pattern which provides the curve for relative power output vs angle. This brings a gradient of optical power incident on the illuminated area. The light intensity is inversely proportional to the square of distance between the measurement point and the light source. This is the second source of nonuniformity on the illuminated area.

In another exemplary embodiment of the present invention, the post curing system uses UVA LED with viewing angle 120 degrees and UVC LED with viewing angle of 60 degrees. The viewing angle is described as the angle made with normal to the LED at which the relative optical power output is 50% of the maximum. The layout for the LED has been designed keeping in mind requirements for uniformity on the illuminated area. The distribution was transformed to relative optical power output vs solid angle. The formula used for translating 2-D angle to solid angle is Formula (1). A cartesian coordinate system was chosen to factor in the distance from the light source. The distance and angle between light source and reference point was obtained using the coordinate system using Formula (2). The intensity at reference point is found using the Formula (3). These formulas are as follows:

$$\Omega = 2\pi(1\text{-}\cos\theta) \qquad\qquad \text{Formula (1);}$$

$$D = \sqrt{((x1\text{-}x2)^\wedge 2 + (y1\text{-}y2)^\wedge 2 + (z1\text{-}z2)^\wedge 2\ )} \qquad \text{Formula (2);}$$

$$I0*\Sigma(\Delta\Omega i * xi) = P/r^\wedge 2 \qquad\qquad \text{Formula (3);}$$

where D is the distance between two points; x1,y1,z1 are the location of the LED in cartesian coordinate system; x2, y2, z2 are location of reference point in cartesian coordinate system; I0 is the irradiance; $\Delta\Omega i$ is the solid angle coverage; and Xi is the intensity factor for the solid angle coverage.

The total intensity at the reference point was calculated using superposition theorem and is the sum of intensities from all the LEDs at the point. The LEDs are distributed with higher densities near the end and in the center to make the sum of intensities uniform across the illuminated area. The uniformity data from the panel is as follows. The LED distribution also focuses on the heat generated by the LEDs. The concentration of LEDs on the ends is limited by the amount of heat generated locally on the edges and the ability to dissipate the heat efficiently. The heat flux was limited to 1Watt/cm2.

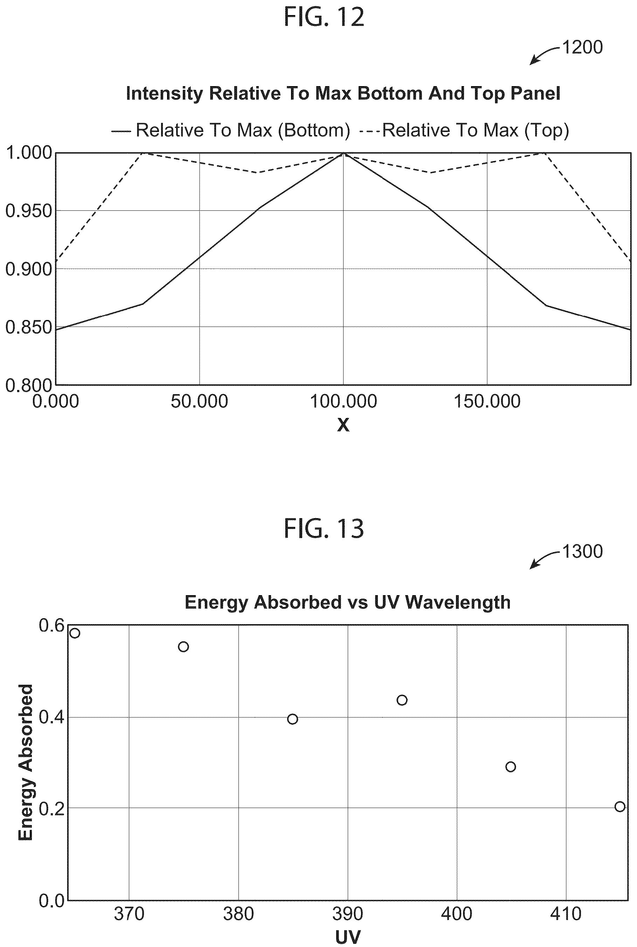

**FIG. 12** illustrates a graph **1200** of relative intensity of light source of bottom and top panel, according to an embodiment of the present invention. **FIG. 13** illustrates a graph **1300** of energy absorption for a post curing system in accordance with an exemplary embodiment of the present invention. The photopolymers have photoinitiators which either through radical formation or cationic initiation, initiate the polymerization. The photoinitiator absorbs energy from the UV light to form free radicals which causes the reaction. The photoinitiators used in photopolymers have a local maxima in absorbance at 365 nm wavelength and the absorbance decreases below 0.1 at wavelength above 420 nm. The absorption gives the efficiency of curing. To decide the optimal wavelength, the overall efficiency was calculated by multiplying the operating efficiency of the LED by the efficiency of curing, shown in Formula (4) and (5).

$$\text{Operating efficiency} = (\text{Optical Power Output}) \div (\text{Forward voltage} * \text{Forward current})$$

Formula (4);

$$\text{Overall efficiency} = \text{Operating efficiency} * \text{Wavelength efficiency}$$

Formula (5).

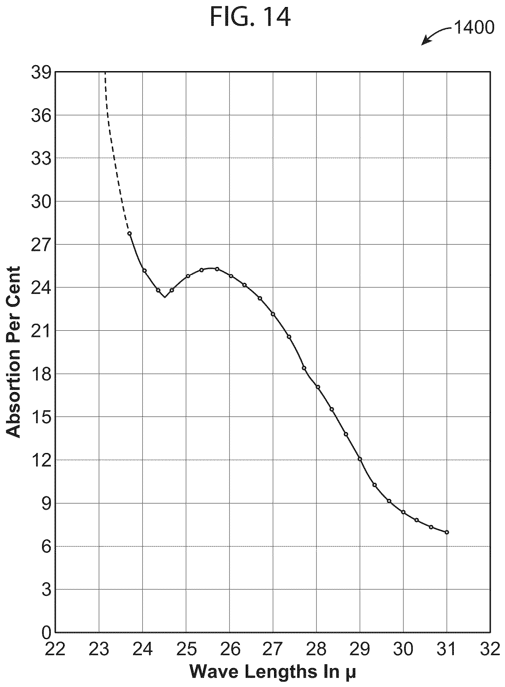

**FIG. 14** illustrates a graph **1400** for absorbance of UVC by e-coli bacteria in accordance with an exemplary embodiment of the present invention. UV light below 280 nm in wavelength destroys nucleic acid in the microorganisms and kills them by disrupting their DNA. The efficiency of destroying nucleic acid depends on the absorption of UV light of different wavelengths. Prior research shows that the absorption of UV has local minima at around 255 nm (25% absorption) and it is much higher at lower wavelengths (greater than 27% below 235 nm). While the efficiency of disinfection increases as the wavelength is decreased, wavelengths below 240 nm cause photolysis of oxygen to ozone which is not desired. The primary sources of UVC light are, low pressure/high pressure mercury lamps, excimer lamps and LEDs. The product uses UVC LEDs as the light source. UV LEDs with wavelength ranging from 265 to 280 nm were evaluated and the overall efficiency was used as a factor to determine the optimal wavelength. The LED system had two different efficiencies, the operating efficiency and the absorption efficiency for nucleic acid. The overall efficiency was obtained as a product of the two efficiencies.

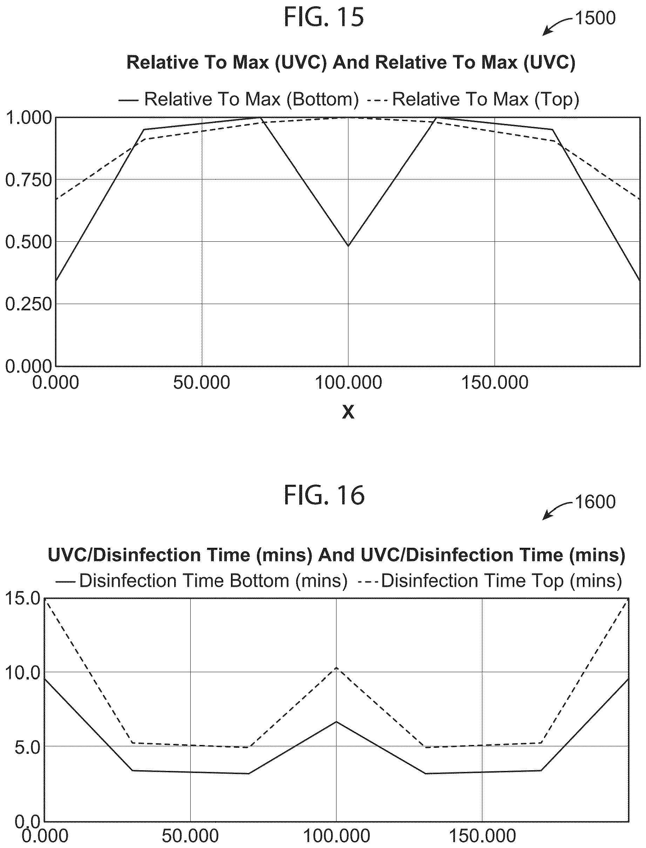

In another exemplary embodiment of the present invention, a common issue with UVC disinfection devices is the inability to disinfect in the presence of undercut regions. The product focuses on disinfecting the surface of printed models and reduces the event of shadow regions by using two light sources, one from the bottom LED panel **420** and one from the top LED panel **418.** Turning to the next set of figures, **FIG. 15** and **FIG. 16** show graphs **(1500, 1600)** of UVC intensity of a post curing system in accordance with an exemplary embodiment of the present invention. The disinfection depends on the energy that is delivered to the desired surface. The data published by FDA recommends a dosage of 186mJ/cm2 for Log 4 level sterilization. According to our experiments, 300mJ/cm2 dosage was needed for a log 2 sterilization of the surface. The intensity for UVC at the target area was calculated using Formula (6):

$$I0 * \Sigma(\Delta\Omega i * xi) = P/r^2 \qquad\qquad \text{Formula (6);}$$

where I0 is the irradiance; $\Delta\Omega i$ is the solid angle coverage; and Xi is the intensity factor for the solid angle coverage.

More specifically, **FIG. 15** shows one exemplary embodiment of the present invention, in which superposition theorem was used to determine the combined intensity at the target area. The uniformity across the target area is shows in **FIG. 15.** This gave a disinfection time performance curve as shown in **FIG. 16,** which was calculated by dividing the target dosage by the intensity.

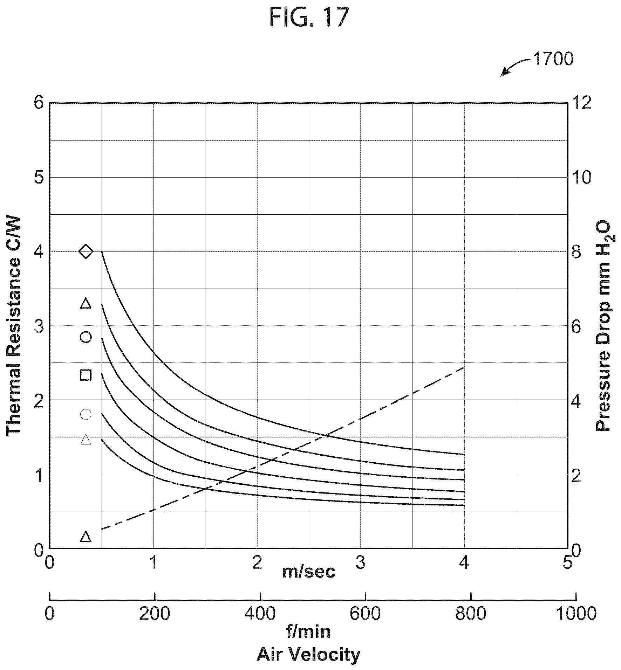

**FIG. 17** illustrates another exemplary embodiment of the present invention in which the rate of heat transfer is directly proportional to surface area in contact with the air. Heat sink **426** is used to increase the surface area for heat transfer. The second factor in the heat transfer equation is the convection coefficient which depends on the airflow velocity. The thermal resistance and the airflow temperature characteristic curve for the heat sink is shown in graph **1700** of **FIG. 17.** The pressure drop due the heat sink is also a function of the airflow velocity. The heat sink **426** has optimized elliptical shaped fins to facilitate airflow and decrease the pressure drop across the heat sink while maintaining high surface area for heat transfer.

In another exemplary embodiment of the present invention, the heat sink **426** and aluminum PCB have machined surfaces but to have the best heat transfer between the surfaces, an interface material needs to be used in between them. The interface material has high thermal conductivity and goes into the void to fill any gaps between the two surfaces. The material used can be thermal grease, which when pressed between the two surfaces can go into the void or a phase changing material which acts like a sheet under room temperature but changes its shape under higher temperature to flow in and fill the gaps. The alternative material choice which is being used in the product is thermal pad **432** which is a soft sheet which is sandwiched between the heat sink **426** and the aluminum PCB.

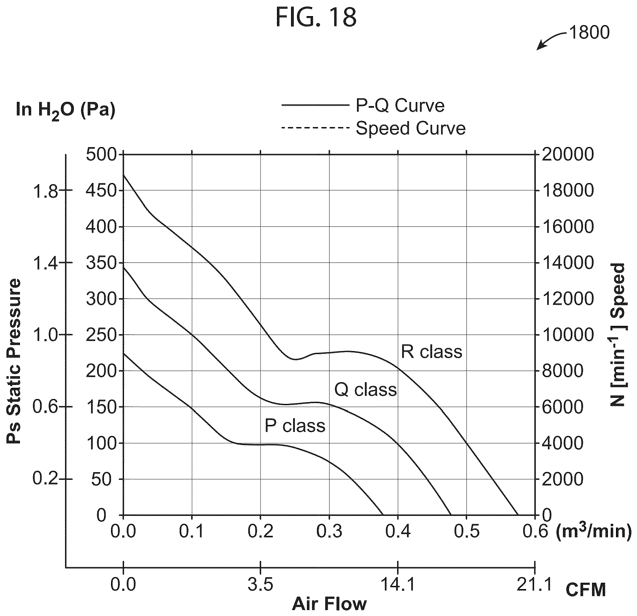

**FIG. 18** illustrates another exemplary embodiment of the present invention in which the LED heat dissipation relies on forced convection. The relation between the airflow and the heat dissipation is given by graph **1800.** The fan statistic curve or static pressure curve provides a relation between the pressure drop and the volumetric flow rate. The operating point for the fan **422** is the intersection of the fan static pressure curve and the system pressure curve. The system pressure curve is the pressure drop across the system, which in the products case is the sum of pressure drop across the heat sink, the front cap and front and back walls of the chamber **400**. This is shows by Formula (**9**):

$$\text{System Resistance Curve} = \text{Pressure drop across (Heat Sink + Front Cap + Wall at Inlets and Outlets)} \qquad \text{Formula (9)}.$$

Based on the airflow vs pressure drop curve for heat sink and the static pressure curve, the operating point for the fan is decided.

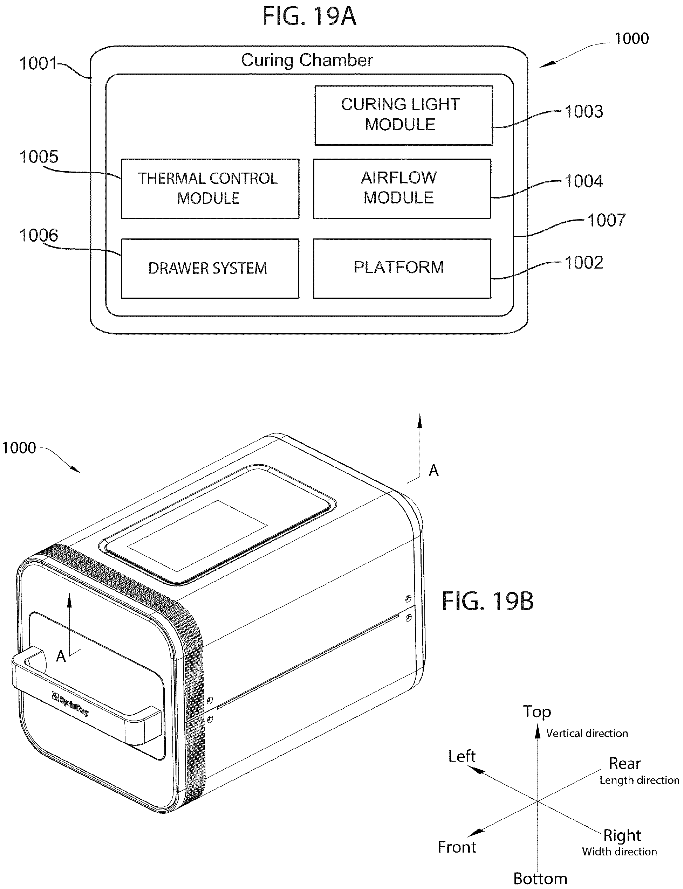

Turning now to the next figure, **FIG. 19A** illustrates a block diagram of a device for post-curing a 3D object, according to exemplary embodiments of the present invention. According to some exemplary embodiments, device **1000** for post-curing a 3D-printed object, may include: a curing chamber **1001** formed by a body **1007** with a removable platform **1002** adapted to receive a 3D-printed part; a curing light module **1003,** including one or more curing light assemblies coupled to the body **1007** and adapted to emit curing light onto the 3D-printed part; an airflow module **1004** for generating an airflow within the curing chamber **1001;** and a thermal control module **1005,** such as heating module adapted to control a temperature of the airflow, wherein the airflow module and thermal control module may be configured to simultaneously: dissipate residual heat from the curing chamber and heat the airflow circulated within the curing chamber to facilitate curing the 3D-printed object. In some exemplary embodiments, as depicted in the block diagram of **FIG. 19A,** device **1000** may further include a drawer system **1006** adapted to remove the removable platform from within the curing chamber.

In exemplary embodiments, some of these components may be contained, form a part of, or may be integral with a portion or portions of body **1007**. For example, and without limiting the scope of the present invention, as will be discussed in more detail below, components of the thermal control module and or the airflow module may include intakes and or chambers or channels that are or form part of body **1007;** in some exemplary embodiments for example, body **1007** may be a chassis and portions of the airflow module may include a plurality of chambers formed within side walls of the chassis adapted to direct an airflow within or throughout portions of device **1000**. Similarly, thermal control module may include a heating module comprising a heating element, which may be situated within a portion of the body or chassis, adapted to heat the airflow circulated within the curing chamber to facilitate curing the 3D-printed object. Similarly, the airflow module may include heat dissipation chambers that are formed by or integral with the body or chassis, these heat dissipation chambers adapted to receive airflow from the curing chamber in order to dissipate residual heat from the curing chamber.

Moreover, and as will be explained below with reference to some exemplary embodiments of the present invention, the one or more light assemblies of curing light module **1003** may be insertably housed inside one or more insertion spaces formed within walls of the body **1007** of the device **1000**. In exemplary embodiments, the one or more curing light source assemblies that form curing light module **1003** may be coupled to one or more heat sinks that register with slots, chambers, openings, or portions of body **1007;** the one or more heat sinks adapted to transfer heat from the one or more curing light source assemblies to a set of heat dissipation chambers that may be formed by or integral with portions of body **1007.**

In some exemplary embodiments, the airflow module **1004** includes a plurality of chambers formed within side walls of the body or chassis that may be adapted to direct the airflow generated within the curing chamber **1001** of device **1000.** For example, in some exemplary embodiments, a first airflow may be generated through a first set of air intakes of the curing chamber and a second airflow may be generated through a second set of air intakes of the curing chamber. In some embodiments, the first set of air intakes may be adapted to direct the first airflow through the curing chamber, while the second set of air intakes may be adapted to direct te second airflow through a first set of heat dissipation chambers adapted to receive the first airflow from the curing chamber.

Turning now to the next set of figures, exemplary embodiments - including embodiments of various components - of device **1000** are discussed and described with reference to **FIGS. 19B - 35.**

**FIG. 19B** illustrates an exemplary embodiment of a post-curing device **1000** that includes: a chassis assembly **100a,** a front cap **200,** a drawer **300,** an inner cap **400,** an airbox assembly **500,** a rear cover plate **600,** a front cover plate **700,** a top sheet metal **800,** and a bottom sheet metal **900.**

## Chassis Assembly

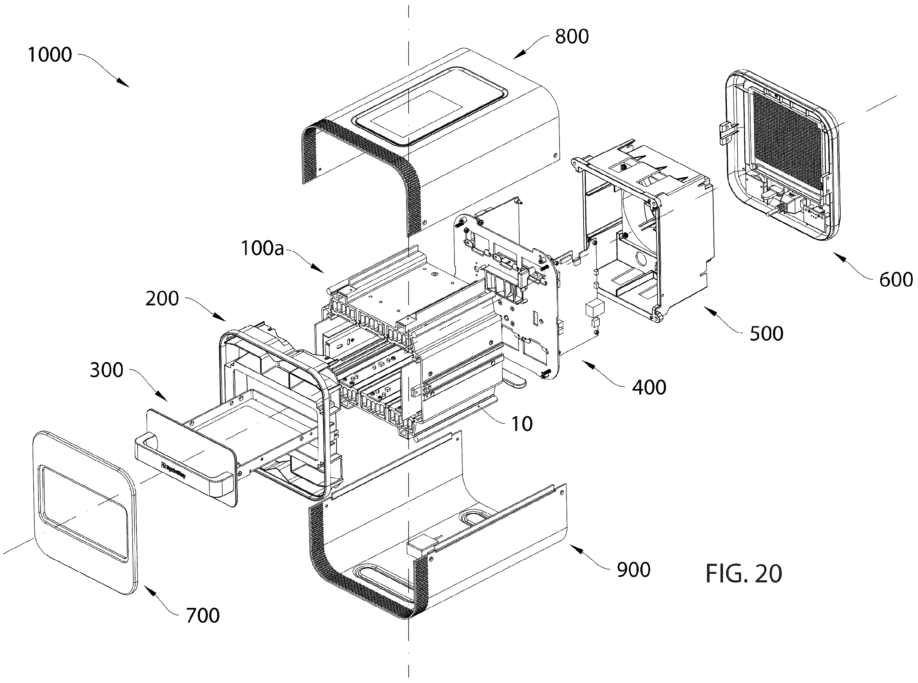

**FIG. 20** illustrates an exemplary embodiment of the chassis assembly **100.** In some exemplary embodiments, the chassis assembly **100a** includes a chassis **10** and one or more light source assemblies **20.** In some exemplary embodiments, the chassis assembly **100a** further includes a pair of guide rail assembly **30.**

In some exemplary embodiments, the chassis **10** is adapted to be a hollow structure wherein the hollow space extends along the longitudinal axis of the chassis **10.** In some exemplary embodiments, the hollow space within the chassis **10** is divided into one or more insertion spaces **11,** a heating chamber **12,** and one or more auxiliary chambers **13.**

In some exemplary embodiments, the chassis included two auxiliary chambers **13**.

The insertion space **11** is adapted to have multiple sections. In some exemplary embodiments, the insertion space **11** may have only one section. The insertion space **11** is adapted to house a light source assembly, wherein the light source assembly **20** is housed in a section of the insertion space **11**. In some exemplary embodiments, the insertion space **11** may have first section and a second section, wherein the first section of the insertion space **11** is adapted to run along one side wall of the drawer **300** and the second section is adapted to run along the opposite side wall of the drawer **300**. In exemplary embodiments, the insertion space **11** to may have an even number of sections to ensure uniform light distribution. For example, and without limiting the scope of the present invention, the insertion space **11** may be adapted to have an even number of sections wherein each pair is situated along the opposite side walls of the drawer **300**. In yet another embodiment, it may be more preferable to have an insertion section **11** with six sections to accommodate more light source assemblies **20,** thereby enhancing the light intensity while also ensuring uniform light distribution.

**Light Source Assembly**

In some exemplary embodiments, the one or more light source assemblies **20** includes a heat sink **22** and an LED panel **21,** wherein the LED panel **21** is affixed to the heat sink. In some exemplary embodiments, the heat sink **22** is adapted to have multiple ridges **121,** wherein the ridges **121** are adapted to fit and position within the grooves **101** of the chassis **10**.

The one or more light source assemblies **20** is adapted to be inserted into the one or more insertion spaces **11** of the chassis **10** along the grooves **101,** wherein the grooves **101** are adapted to securely affix the one or more light source assemblies **20**. The number of light source assemblies can match or be less than the number of insertion spaces **11,** wherein each insertion space **11** is adapted to house a light source assembly but is not required to do so. As such, the chassis of a post-curing device according to the present invention may include one or more light source assemblies **20**. In exemplary embodiments, the number of light source assemblies is an even quantity such that each pair of light source assemblies is arranged opposite of each other to ensure that both sides of the drawer **300** are illuminated. In some exemplary embodiments, there are six light source assemblies **20** to enhance light intensity and ensure uniform light distribution. In some exemplary embodiments, there are three light source assemblies **20** situated across the top portion of the chassis **10** and three additional light source assemblies **20** situated across the bottom portion of the chassis **10.**

In some exemplary embodiments, several LED lamps may be uniformly situated on the LED panel **21**. In some exemplary embodiments, the LED lamps situated on the LED panel **21** may be a combination of LED lamps with 365nm & 385nm wavelengths. In some exemplary embodiments, the combination of LED lamps may vary for different materials. For example, and without limiting the scope of the present invention, the LED lamps may have varying combinations such as 365nm & 405nm, 385nm & 405nm. Any combination of two or more wavelengths among 365nm, 385nm, 405nm, or other wavelengths may be used.

For example, and without limiting the scope of the present invention, materials printed with LCD 3D printers generally cure well at 405nm such that 3D-printed parts from these materials will be more suitable for a combination of 365nm & 405nm LED lamps. It is known by persons of ordinary skill in the art that certain common materials typically cure well at 385nm or 405nm. In yet another example, without limiting the scope of the present invention, using a combination of 385nm & 405nm LED lamps may provide higher versatility for the post-curing device **1000.**

In some exemplary embodiments, the LED panel further includes several UVC LED lamps, wherein the UVC LED lamps are adapted to emit short-wave ultraviolet light to sterilize the 3D-printed parts. In some exemplary embodiments, the typical wavelength of the UVC LED lamps ranges from 100nm to 280nm. In some exemplary embodiments, the UVC LED lamps have a wavelength that ranges from 200nm to 280nm. In this range, the ultraviolet light can alter the genetic material of microorganisms and disrupt their ability to reproduce, which provides a sterilizing effect. In exemplary embodiments, the UVC LED lamps are situated in the empty spaces on the LED panel **21,** and used after post-curing to avoid the uniform light intensity during the post-curing process.

In some exemplary embodiments, the guide rail assembly **30** includes an installation plate **31** and a pair of guide rails **32** mounted on the installation plate **31**. In some exemplary embodiments, the pair of guide rails **32** are adapted to facilitate the removal of drawer **300,** wherein the drawer **300** includes a platform. In some exemplary embodiments, a drawer system includes a pair of guide rails **32** to facilitate the removal of the platform from within the heating chamber **12** along the heating chamber's longitudinal axis. In some exemplary embodiments, the guide rail assembly **30** is situated along the medial portion of the lateral walls of the chassis **10**. In some exemplary embodiments, the pair of guide rails **32** are adapted to receive the drawer **300,** wherein receiving the drawer **300** divides the heating chamber **12** into an upper and a lower region.

In some exemplary embodiments, the installation plate **31** has one or more air vents **33**. The installation plate **31** is adapted to be inserted and affixed along the groove **102** of the chassis **10**. The upper and lower edges of the installation plate **31** are adapted to be affixed along the groove **102** of the chassis to form an auxiliary chamber **13** with the side wall of the chassis **10**. In some exemplary embodiments, the chassis **10** of a post-curing device **1000** in accordance with the present invention includes two auxiliary chambers **13a, 13b**. In some exemplary embodiments, the auxiliary chambers **13a, 13b** and the first set of heating chambers **12** are interconnected through one or more air vents **33** situated on the installation plate, wherein the one or more air vents **33** are adapted to facilitate the movement of the hot airflow from the auxiliary chambers **13a, 13b** to the first set of heat dissipation chambers **201**. In some exemplary embodiments, the movement of hot airflow through the one or more air vents **33** facilitates the uniform heating of the 3D-printed parts to be cured.

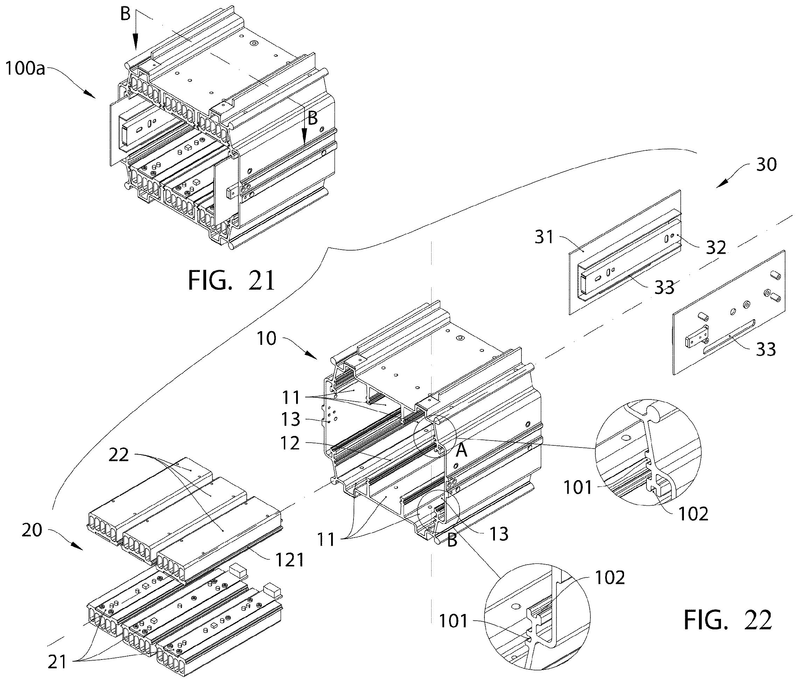

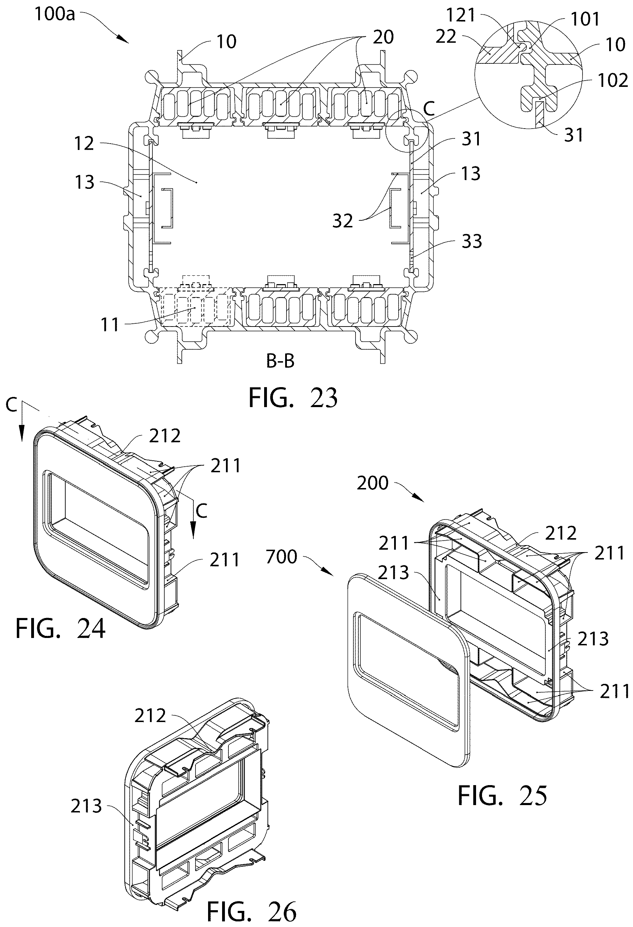

**FIG. 23** illustrates the cross-sectional view at Area **B-B** in **FIG. 21**. **FIG. 23** further illustrates a detailed view at Area C. *(In order to show the insertion space 11, the lower left light source assembly 20 is represented with dashed lines).*

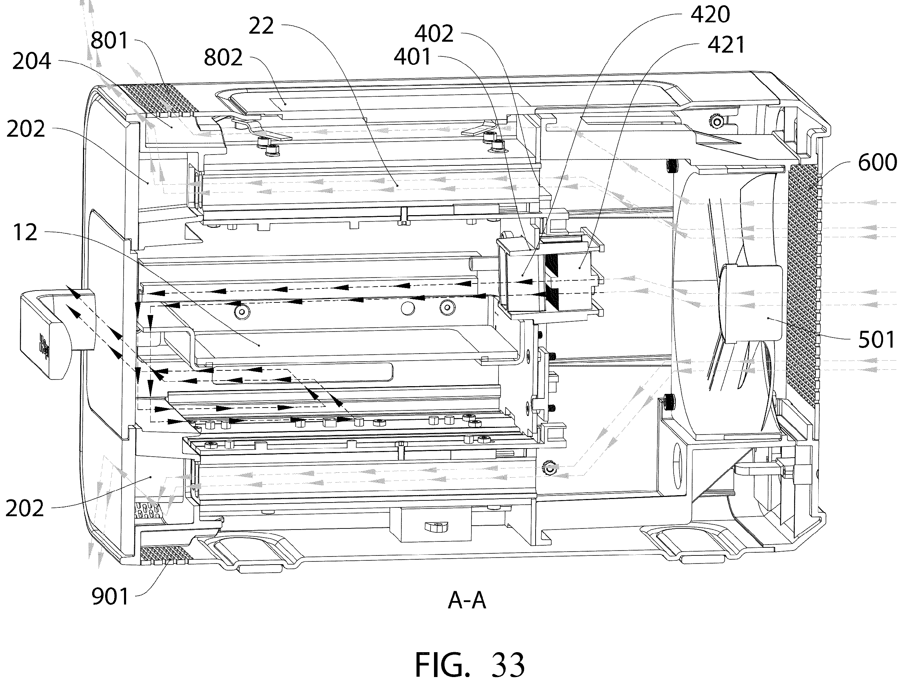

**FIG. 23** illustrates an exemplary embodiment of the chassis assembly **100a** in the assembled state. More specifically, **FIG. 23** illustrates an exemplary embodiment of the one or more insertion spaces **11,** the heating chamber **12,** and the two auxiliary chambers **13a** and **13b** within the chassis **10**. In some exemplary embodiments, the heating chamber **12** may be divided into upper and lower sections, wherein the upper and lower sections are separated by the drawer **300** (see, for example, **FIG. 33**). In some exemplary embodiments, one or more insertion spaces **11** are situated along the upper and lower portions of the chassis assembly **100a**. In some exemplary embodiments, the one or more insertion spaces **11** comprise the upper and lower walls of the chassis **10**. In some exemplary embodiments, as illustrated in **FIG. 5,** the one or more insertion spaces **11** are situated on opposite ends of the chassis assembly **11**.

**FIG. 24** illustrates a perspective view of the front cap **200** and the front cover plate **700** of an exemplary embodiment in the assembled state. **FIG. 25** illustrates an exploded view of the front cap **200** and the front cover plate **700** of an exemplary embodiment of the present invention in the assembled state. **FIG. 26** illustrates another perspective view of the front cap **200** and the front cover plate **700** of an exemplary embodiment of the present invention.

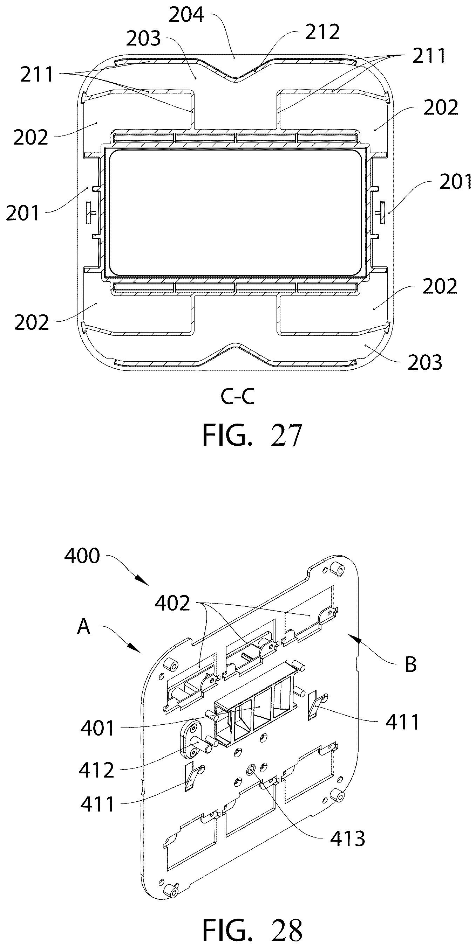

**FIG. 27** illustrates a cross-sectional view of the front cap **200** and the front cover plate **700** in an exemplary embodiment of the present invention at Area **C-C** in **FIG. 24**.

As illustrated in **FIGS. 24 - 27,** the front cap **200** is adapted to be directly affixed to the front part of the chassis **10** in exemplary embodiments. In some exemplary embodiments, the front cap **200** has several chamber structures to facilitate the affixation of the front cap **200** to the front part of the chassis **10**. For example, and without limiting the scope of the present invention, the several chamber structures are adapted to match the shape of the one or more insertion spaces **11** (or the light source assemblies **20** situated within the one or more insertion spaces **11**), the auxiliary chamber **13** and so forth. In some exemplary embodiments, the front cap **200** is adapted to be directly affixed to the front part of the chassis **10** to facilitate an outward hot airflow from the post-curing device **1000**.

In some exemplary embodiments, the front cap **200** further includes multiple ribs **211** extending along the length direction of the chassis assembly **100a**. In some exemplary embodiments, the multiple ribs are positioned at or about the intersections of the heating chamber **12,** the auxiliary chambers **13,** the insertion space **11,** and the respective light source assemblies **20** inserted therein. In some exemplary embodiments, the multiple ribs **211** are adapted to separate the hot airflow and to facilitate the direction of flow. In some exemplary embodiments, the multiple ribs **211** are adapted to guide the hot airflow through various channels to different areas for expulsion from the post-curing device **1000**. In some exemplary embodiments, the multiple ribs **211** are structurally positioned to create a channel that facilitates that movement of a hot airflow within a post-curing device **1000** in accordance with the present invention. In some exemplary embodiments, the multiple ribs **211** may have a concave point **212** in the medial portion, wherein the concave point includes two oblique edges that further facilitate the movement of hot airflow into separate directions.

In some exemplary embodiments, as illustrated by **FIG. 27** the front cap **200** is divided by the multiple ribs **211** into multiple chambers: the first heat dissipation chamber **201,** the second heat dissipation chamber **202,** and the third heat dissipation chamber **203**. In some exemplary embodiments, the front cap **200** may be further divided by the multiple ribs **211** into a fourth heat dissipation chamber **204**.

In some exemplary embodiments, the first heat dissipation chamber **201** is situated along the lateral walls of a post-curing device **1000** in accordance with the present invention. In some exemplary embodiments, the first heat dissipation chamber **201** is adapted to be connected with the auxiliary chamber **13**. In some exemplary embodiments, the first heat dissipation chamber is adapted to be in thermal communication with the auxiliary chamber **13** to expel hot airflow from the middle side region of the post-curing device **1000**. In some exemplary embodiments, the auxiliary chamber **13** is adapted to facilitate the hot airflow through the first heat dissipation chamber **201**.

In some exemplary embodiments, a post-curing device **1000** in accordance with the present invention includes a stopper part **213**, wherein the stopper part **213** is situated on the front side of the first heat dissipation chamber **201** adjacent to the front cover plate **700**. In some exemplary embodiments, the stopper part **213** extends vertically to the multiple ribs **211** and is adapted to direct the hot airflow to facilitate the expulsion of hot air from the side region, including the middle regions at the side, along the width direction of a post-curing device **1000** in accordance with the present invention.

In some exemplary embodiments, a post-curing device **1000** in accordance with the present invention includes one or more secondary heat dissipation chambers **202,** wherein the one or more secondary heat dissipation chambers **202** are adapted to be interconnected with the insertion spaces **11** (or light source assemblies **20**) to expel hot airflow from the side regions, including the upper and lower middle regions at each side of a post-curing device **1000** in accordance with the present invention. In some exemplary embodiments, the one or more secondary heat dissipation chambers **202** are situated at the corners of the chassis assembly **100a.** In some exemplary embodiments, a post-curing device **1000** in accordance with the present invention includes four secondary heat dissipation chambers **202,** each secondary heat dissipation chamber **202** situated at one of the four corners of the chassis assembly **100a.** In some exemplary embodiments, one secondary heat dissipation chamber is interconnected with the insertion spaces **11** (or light sources assemblies **20**) on the right and another secondary heat dissipation chamber is interconnected with the insertion spaces **11** (or light sources assemblies **20**) on the left.

In some exemplary embodiments, a post-curing device **1000** in accordance with the present invention includes a third set of heat dissipation chambers **203,** wherein the third set of heat dissipation chambers **203** is adapted to be interconnected with a medial portion of the one or more insertion spaces **11** (or the one or more light assemblies **20**) to expel hot airflow from the upper and lower regions. In some exemplary embodiments, the third set of heat dissipation chambers are defined by the space between the one or more ribs **211.** In some exemplary embodiments, the one or more ribs **211** that define the third set of heat dissipation chamber may have a concave point, wherein the concave point is situated in a medial point of the one or more ribs **211** and is adapted to facilitate the expulsion of the hot airflow to the exits on both sides of a post-curing device **1000** in accordance with the present invention. In some exemplary embodiments, the concavity **212** formed at the concave point may be V-shaped as illustrated in **FIG. 27.**

In some exemplary embodiments, a post-curing device **1000** in accordance with the present invention may include one or more quaternary heat dissipation chambers **204,** wherein the one or more quaternary heat dissipation chambers **204** is situated on the underside space of the screen **802** (not illustrated in **FIGS. 24 - 27**) on the top sheet metal **800** to facilitate the expulsion of heat generated by the screen **802.**

In some exemplary embodiments, the front cover plate **700** may be used as an alternative to the stopper part, wherein the front cover plate **700** may be adapted to alter the direction of the hot airflow and to facilitate the expulsion of the hot airflow from a post-curing device or chamber **1000** in accordance with the present invention. In some exemplary embodiments, the front cover plate **700** is made of one or more flame retardant materials. For example, and in no way limiting the scope of the present invention, the front cover plate **700** may be made of PC-6610 or some other flame-retardant material rated v-0 that passes heat distortion test ISO 75/A (125 C without annealing, 140C with annealing).

In some exemplary embodiments, a post-curing device in accordance with the present invention may include a stopper part **213** at the lateral areas of the one or more primary heat dissipation chambers **201** and may further include a similar stopper part situated at the chamber's front side. In some exemplary embodiments, the similar stopper part may be situated at the chamber's front side in lieu of a front cover plate **700,** wherein the similar stopper part may be adapted to facilitate the change in the direction of a hot airflow. In some exemplary embodiments, the stopper part **213** may be integrated within the front cap **200.** In some exemplary embodiments, the stopper part **213** may be molded separately and attached to the ribs **211.**

**FIG. 28** illustrates a perspective view of the inner cap **400** of a post-curing device **1000** in accordance with the present invention, where **surface A** faces the airbox assembly **500** and **surface B** faces the chassis assembly **100a.**

In some exemplary embodiments, the inner cap **400** may include several air intakes or several sets of air intakes. For example, and without limiting the scope of the present invention, the inner cap **400** may include a first set of air intakes **401** and a second set of air intakes **402.**

In some exemplary embodiments, a post-curing device **1000** in accordance with the present invention includes a first set of air intakes **401,** wherein the first set of air intakes **401** may be adapted to connect with the rear side of the heating chamber **12** (see **FIG. 22** and **FIG. 23**). In some exemplary embodiments, the first set of air intakes **401** may be adapted to connect with the upper part of the heating chamber **12.** In some exemplary embodiments, the first set of air intakes **401** may be equipped with a heater housing element **420** (not illustrated in **FIG. 28**) and a heating element **421** (not illustrated in **FIG. 28**), wherein the heating element **421** is adapted to heat the airflow and the heater housing element **420** is adapted to uniformly distribute the heated airflow to various areas of the heating chamber **12.**

In some exemplary embodiments, a post-curing device **1000** in accordance with the present invention further includes a second set of air intakes **402,** wherein the second set of air intakes **402** is adapted to connect with the rear side of the insertion spaces **11** (or light source assemblies **20**) (see **FIG. 22** and **FIG. 23**). In some exemplary embodiments, each air intake of the second set of air intakes **402** may be adapted to match the one or more insertion spaces **11** (or the one or more light source assemblies **20**). In some exemplary embodiments, the second set of air intakes **402** is designed to have a complementary structure to the shape of the one or more insertion spaces **11** (or the one or more light source assemblies **20**), wherein the second set of air intakes **402** and the one or more insertion spaces **11** (or the one or more light assemblies **20**) are precisely interlocked when the inner cap **400** is affixed to the rear part of the chassis **10.** In some exemplary embodiments, the second set of air intakes is adapted to facilitate the expulsion of hot air generated by the light source assembles **20** of the chassis assembly **100a.** In some exemplary embodiments, the second airflow or an airflow directed through the second set of air intakes **402** will flow directly to the heat sinks **22** of the one or more light source assemblies **20** to facilitate the removal of heat absorbed by the heat sinks **22** from the post-curing device **1000.**

In some exemplary embodiments, on the **surface B,** the inner cap **400** may be equipped with one or more micro switches **411,** a temperature sensor **412,** and a light intensity sensor **413.**

In some exemplary embodiments, the one or more micro switches **411** may be positioned in the middle region of the inner cap **400.** For example, and without limiting the scope of the present invention, in some exemplary embodiments, when the user finishes placing the 3D-printed parts to be cured and closes the drawer **300 (**see **FIG. 20),** the rear end of the drawer **300** will activate the micro switch **411.** In some exemplary embodiments, a post-curing device **1000** in accordance with the present invention may require the one or more micro switches **411** to be triggered as a precondition for the light source assemblies **20** and the heating element **421** to be activated. In some exemplary embodiments, when the drawer **300** is not closed or the one or more switches **411** is not triggered, the light source assemblies **20** and the heating element **421** will not start.

In some exemplary embodiments, a post-curing device in accordance with the present invention may include a temperature sensor **412,** wherein the temperature sensor **412** is adapted to monitor the temperature within the heating chamber **12** to ensure that the temperature of the heating chamber **12** always remains within a predetermined threshold range. In some exemplary embodiments, the predetermined threshold range of the heating chamber **12** is from 24°C to 80°C. In some exemplary embodiments, the predetermined threshold range of the heating chamber **12** is greater than 60°C, but less than 80°C.

In some exemplary embodiments, the predetermined threshold range and other related temperature threshold settings may vary depending on the different material of the 3D-printed parts to be cured. In some exemplary embodiments, a post-curing device **1000** in accordance with the present invention will include a control system, wherein the control system is adapted to store multiple predetermined temperature threshold range values that correspond to different materials. In some exemplary embodiments, a user can select the material of the 3D-printed parts to be cured on the screen **802** prior to starting the post-curing process, thereby allowing the control system to select the appropriate predetermined temperature threshold range based on the user's selection.

In some exemplary embodiments, a post-curing device **1000** in accordance with the present invention may include a light intensity sensor **413,** wherein the light intensity sensor **413** is adapted to monitor the light intensity inside the heating chamber **12** to ensure that the light intensity is within a threshold range that meets the curing requirements for the 3D-printed part to be cured. In some exemplary embodiments, the light intensity sensor **413** is adapted to have multiple programmable settings. In some exemplary embodiments, the control system may be adapted to implement an algorithm to dynamically adjust the light intensity based on the feedback received from the light intensity sensor **413.** In some exemplary embodiments, the light intensity in the heating chamber **12** is controlled to always be above 150mW/cm$^2$. In some exemplary embodiments, the light intensity in the heating chamber **12** is controlled to be within a predetermined threshold. In some exemplary embodiments, when the light intensity sensor **413** detects a light intensity that exceeds or falls below the predetermined threshold, the control system is adapted to trigger an algorithm, wherein the algorithm compares the current light intensity reading with the factory reading and increase or decrease the current supplied to the LED panel **21** to increase or decrease the light intensity to compensate for any excess or loss in light intensity. In some exemplary embodiments, when a specific LED lamp is damaged or malfunctioning, a current reading feedback mechanism from the driver board is adapted to detect any damage or malfunction and to set an alarm to the user on the screen, instructing the user to service or replace the corresponding malfunctioning LED lamp or light source assemblies **20.**

In some exemplary embodiments, the light intensity sensor **413** may detect a light intensity below the predetermined threshold when one or more LED lamps on the LED panel **21** (see **FIG. 22**) have aged or become damaged. In some exemplary embodiments, the current that travels through aged or damaged LED lamps **21** in a constant voltage power supply will decrease, resulting in reduced light intensity and uniformity and thereby impacting the uniformity of the light reaching various areas of the drawer **300** (see **FIG. 20**). Therefore, in some exemplary embodiments, when the light intensity sensor **413** detects that the light intensity is below the predetermined threshold, the control system is adapted to check the current passing through each LED lamp and determine their aging or damage status and ultimately inform user to perform maintenance or replacement, or the control system can boost the current supplied to the LED panel **21** to compensate for the loss in light intensity by increasing the current output. The aforementioned mechanisms are listed as examples and are in no way intended to limit the scope of the present invention. There may be other mechanisms that are either dynamic or pre-programmable for a post-curing device **1000** in accordance with the present invention to respond to a detection of light intensity outside of the predetermined threshold.

In some exemplary embodiments, the light intensity sensor **413** may detect a decrease in light intensity and the control system may simultaneously detect a similar decrease in the supplied current when there is an aged LED lamp. In some exemplary embodiments, the control system of a post-curing device **1000** may be adapted to increase the overall current value to restore the light intensity to a value within the predetermined threshold.

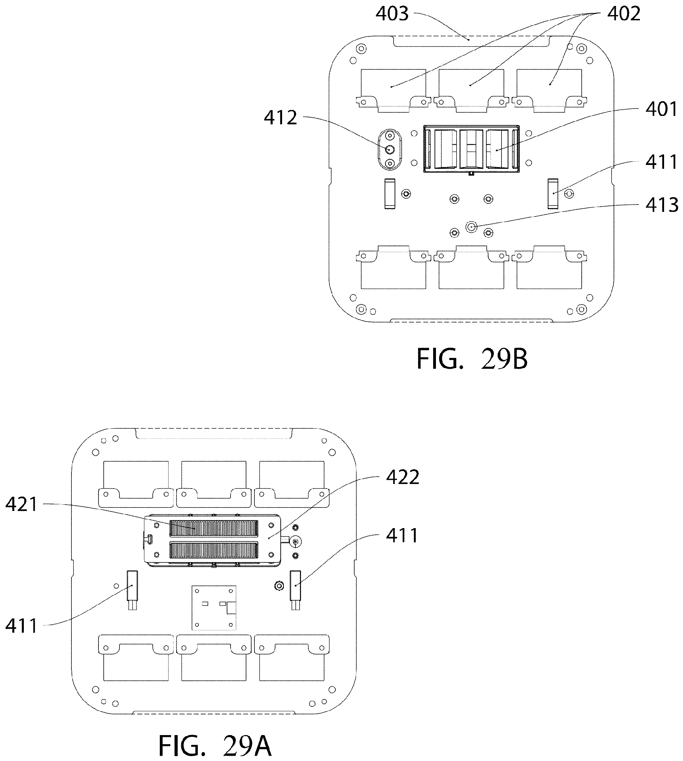

**FIG. 29A** illustrates a front view of **surface A** of the inner cap **400** of a post-curing device in accordance with the present invention; **FIG. 29B** illustrates a front view of **surface B** of the inner cap **400** of a post-curing device in accordance with the present invention.

In some exemplary embodiments, as illustrated in **FIGS. 29A** and **29B,** the inner cap **400** of a post-curing device **1000** in accordance with the present invention may include a third set of air intakes **403,** wherein the third set of air intakes are situated in the upper portion of the inner cap **400.** In some exemplary embodiments, the third set of air intakes **403** extends across both ends of the length axis of a post-curing device **1000** in accordance with the present invention. In some exemplary embodiments, the front cap **200** may further include a fourth set of heat dissipation chambers **204** (see **FIGS. 24 - 27),** wherein the fourth set of heat dissipation chambers **204** is defined by a space below the top sheet metal **800** and above the upper boundary of the chassis **10.**

In some exemplary embodiments, the third set of air intakes **403** is adapted to facilitate the expulsion of heat generated from the screen **802.** In some exemplary embodiments, the third set of air intakes **403** is connected with a back panel of the screen **802.** In some exemplary embodiments, the airflow that facilitates the removal of heat generated from the screen **802** may enter by way of the third set of air intakes **403,** which is interconnected with the underside space of the screen **802.**

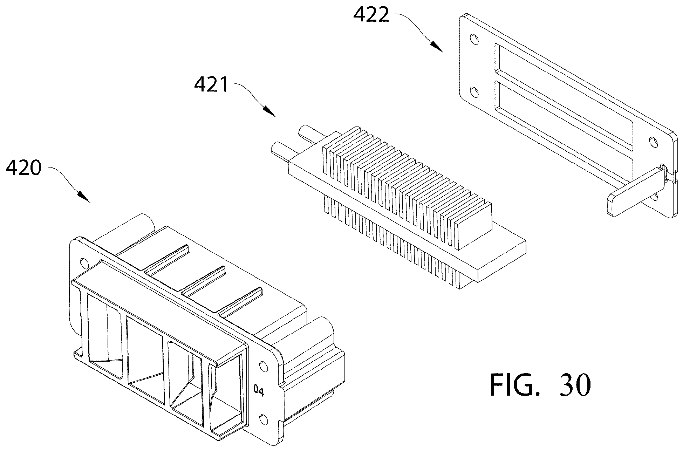

**FIG. 30** illustrates an exploded view of the heater housing element **420** and the heating element **421** situated on the inner cap **400** of an exemplary embodiment of the present invention. In some exemplary embodiments, the heater housing element **420** and the heating element **421** may be installed onto the inner cap **400** by the heater cap **422.**

In some exemplary embodiments, the heating element **421** may be a PTC air heater, which primarily includes a PTC ceramic heating plate and an aluminum heat sink. In some exemplary embodiments, a first airflow or the airflow that passes through the first air intake **401** into the heating chamber **12** is adapted to carry away the heat from the aluminum heat sink and to preheat the heating chamber **12.**

In some exemplary embodiments, the control system may monitor the temperature of the heating chamber **12** and determine whether to activate the heating element **421** and/or adjust its power based on the detected temperature. In some other exemplary embodiments, the control system may determine the duration of the initial preheating based on a pre-established temperature-time curve. For example, and in no way limiting the scope of the present invention, the preheating duration may be 60 seconds when the heating element power is 180W.

In some exemplary embodiments, the heater housing element **420** may include several vanes, wherein the several vanes have different angles that disperse the hot airflow along the length direction in various directions. In some exemplary embodiments, the dispersion of the hot airflow through various directions along the length direction facilitates the uniform heating of the upper part of the heating chamber **12.**

In some exemplary embodiments, the heater housing element **420** may have 3 to 5 vanes and the angle between each vane may be from 36° to 60°. In some exemplary embodiments, the angle between each vane may be less than 36° or greater than 60°.

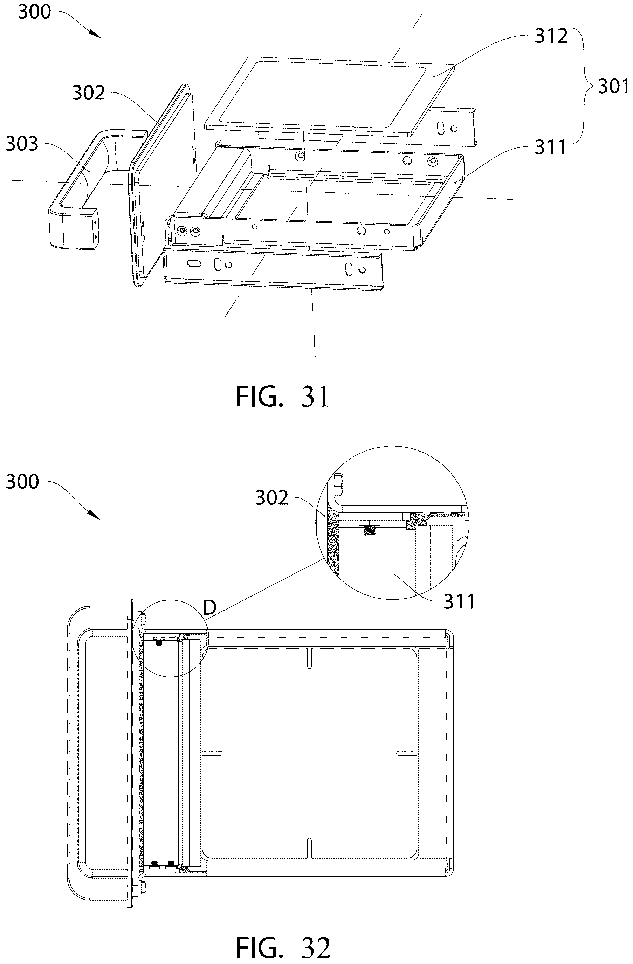

**FIG. 31** illustrates an exploded view of the drawer **300** of a post-curing device in accordance with the present invention; **FIG. 32** illustrates an exemplary top view of the drawer **300** and a detailed view at its **Area D.**

In some exemplary embodiments, as illustrated in **FIGS. 31** and **32,** the drawer 300 includes a drawer body **301,** a door panel **302,** and a handle **303.** In some exemplary embodiments, the drawer body **301** further includes a drawer frame **311** and a platform **312,** wherein the platform **312** is configured to hold the 3D-printed parts to be cured and is removably placed on the drawer frame **311;** and the drawer frame **311** has a reserved gap in contact with the door panel **302** and internal structural gaps adapted to facilitate the hot airflow from the top of the drawer body **301** to the bottom.

In some exemplary embodiments, the heating chamber **12** is adapted to receive a drawer body **301.** In some exemplary embodiments, the drawer body **301** is situated within the heating chamber **12** in a manner that divides the heating chamber **12** into upper and lower parts (see **FIG. 20**). In some exemplary embodiments, the first airflow or an airflow from the first set of air intakes **401** is heated by the heating element **421** before entering the upper part of the heating chamber **12.** In some exemplary embodiments, the first airflow or an airflow from the first set of air intakes **401** that has been heated will pass through the reserved gaps to enter the lower part of the heating chamber **12.** In some exemplary embodiments, the reserved gaps are adapted to facilitate the movement of the first airflow or an airflow from the first set of air intakes from the upper part of the heating chamber **12** to the lower part of the heating chamber **12** and achieve uniform heating of the upper and lower surfaces of the platform **312.**

**FIG. 33** illustrates a sectional perspective view at **A-A** in **FIG. 19B.** More specifically, **FIG. 33** illustrates an exemplary post-curing device **1000** in accordance with the present invention and the various airflow paths of the heating system and cooling system during operation.

In some exemplary embodiments, as illustrates in **FIGS. 19** and **33,** the rear cover plate **600** is removably affixed to the rear side of the airbox assembly **500.** In some exemplary embodiments, the airbox assembly **500** includes one or more fans **501,** wherein the one or more fans **501** facilitate the introduction of one or more airflows into the airbox assembly **500** from an external environment. In some exemplary embodiments, the rear cover plate **600** includes holes to allow air to enter the post-curing device **1000.**

In some exemplary embodiments, the front cap **200,** the top sheet metal **800** and the bottom sheet metal **900** includes holes to facilitate the expulsion of hot air from a post-curing device **1000** in accordance with the present invention. In some exemplary embodiments, the position of the respective holes on the rear cover plate **600,** front cap **200,** the top sheet metal **800,** and the bottom sheet metal **900** are determined by the position of the one or more fans **501** and/or the direction of the one or more airflows. In some exemplary embodiments, rear cover plate **600** has a high hole density across.

In some exemplary embodiments, the top sheet metal **800** and bottom sheet metal **900** have a high hole density at a top heat dissipation area and a bottom heat dissipation area, respectively, wherein both heat dissipation areas are situated towards the front of a post-curing device **1000** in accordance with the present invention as illustrated in **FIG. 33.** In some exemplary embodiments, the top sheet metal **800** and/or the bottom sheet metal **900** of a post-curing device **1000** in accordance with the present invention may have a uniform hole density across the respective parts. In some exemplary embodiments, the hole density at the top and bottom heat dissipation areas is adapted to control the rate of the various airflows within the post-curing device **1000.**

In some exemplary embodiments, the inner cap **400** (see **FIGS. 29A, 29B**) may include several sets of air intakes. For example, and without limiting the scope of the present invention, the inner cap **400** may include a first, second, and third set of air intakes. In some exemplary embodiments, the one or more fans are adapted to guide an airflow from an external environment into the airbox assembly **500**. In some exemplary embodiments, the airflow that enters the airbox assembly **500** is then further divided into two or more airflows by the inner cap **400**. In some exemplary embodiments, the inner cap **400** may divide the airflow into a first airflow, a second airflow, and a third airflow, wherein the first, second, and third airflows enter the heating chamber **12,** the heat sink **22,** and the underside space of the screen **802,** respectively.

In some exemplary embodiments, a post-curing device **1000** in accordance with the present invention may include multiple fans **501**. In some exemplary embodiments, each of the multiple fans **01** may correspond with one or more sets of air intakes. In some exemplary embodiments, each of the multiple fans **501** may be individually adjusted.

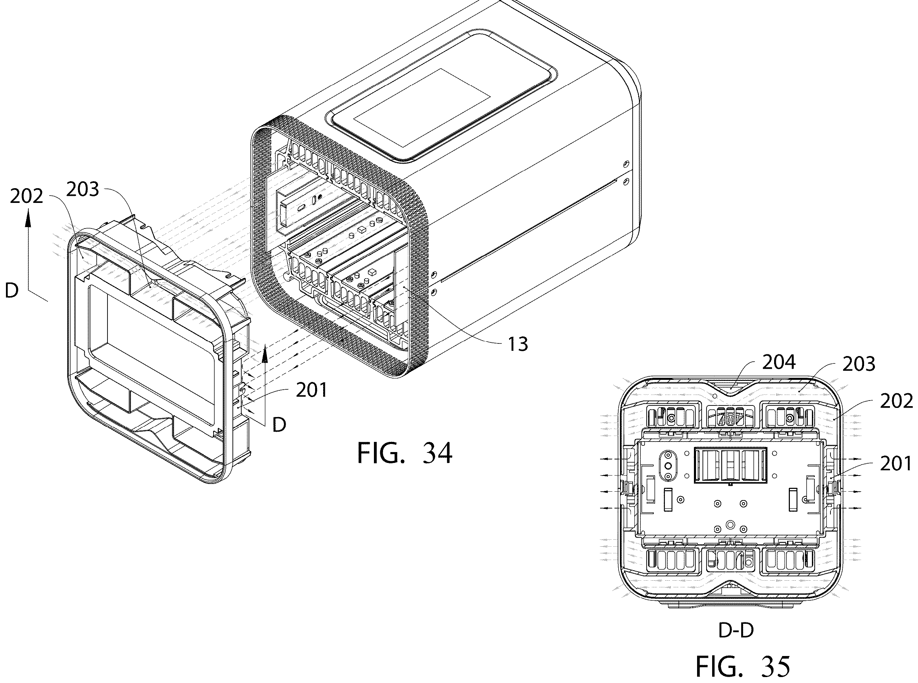

**FIG. 34** illustrates an exploded view of the front cap **200** and the post-curing device **1000.** More specifically, **FIG. 34** depicts the respective airflow paths from the heat sink **22** and the auxiliary chamber 13 to the outside of the post-curing chamber **1000** through the front cap **200.**

**FIG. 35** illustrates a cross-sectional view of the front cap of an exemplary embodiment at **D-D** in **FIG. 34.**

In some exemplary embodiments, the first airflow or an airflow directed through the first set of air intakes **401** will be continuously heated by the heating element **421** and uniformly circulated to various regions of the upper part of the heating chamber **12.**

Subsequently, the heated first airflow is directed to the lower part of the heating chamber **12** through several gaps on the front side of the drawer **300** (see **FIGS. 32** and **33**), wherein directing the first airflow to the lower part of the heating chamber **12** heats the underside of the 3D-printed parts to be cured on the platform **312**. The heated first airflow is then directed from the lower part of the heating chamber **12** into the one or more auxiliary chambers **13** through the air vent **33** on the inner cap **31** (see **FIGS. 22** and **23**). The one or more auxiliary chambers **13** transfer the heated first airflow to the first set of heat dissipation chambers **201** and the first set of heat dissipation chambers **201** thereby directs the heated first airflow to the corresponding heat dissipation areas **801, 901**. In some exemplary embodiments, the heat dissipation areas are situated on the side regions of the device (see for example FIG. 27), including the middle regions at the side, along the width direction of a post-curing device such that they are adapted to direct the hot airflow to the sides and facilitate the expulsion of hot air from the sides of the device beneath - such as to the sides of top sheet metal **800** and or to the sides of bottom sheet metal **900**. In some exemplary embodiments, the heat dissipation areas may be situated on top or bottom of the device or other regions suitable for the same without deviating from the scope of the present invention.

## Cooling System

In some exemplary embodiments, the second airflow or the airflow that passes through the second set of air intakes **402** on the inner cap **400** enters the heat sink **22** and absorbs the heat generated by the LED panel **21**. In some exemplary embodiments, the heated second airflow is transferred to the front cap **200,** wherein the front cap **200** is adapted to expel the hot airflow from the device.

In some exemplary embodiments, six light source assemblies **20** are inserted into the chassis **10** (see **FIG. 22**), wherein each of the six light source assembles **20** includes a heat sink **22.** Correspondingly, the front cap **200** includes a second set of heat dissipation chambers **202,** wherein the second set of heat dissipation chambers **202** are adapted to facilitate the removal of heat from the heat sinks **22** on the left and right sides. Iin some exemplary embodiments, the cooling system further includes a third set of heat dissipation chambers **203** adapted to facilitate the removal of heat from the heat sinks **22** situated in the middle. The hot airflow heated by the heat sinks **22** is guided by the front cap **200** to the dense holes (e.g., heat dissipation areas **801, 901**) on the front sides of the top sheet metal **800** and bottom sheet metal 900, and expelled from the post-curing device **1000.**

Furthermore, the airflow can also reach the underside space of the screen **802** through the third air intake **403** on the inner cap **400,** and be expelled from the upper side of the heat dissipation area **801** of the top sheet metal **800.**

In some exemplary embodiments, the post-curing process includes:

S101: Activating the heating element **421** (e.g., PTC air heater) and the fan **501,** continuously preheating the heating chamber **12** for a period of time, preferably 60 seconds, and to a predetermined temperature, preferably over 60 °C;

S102: Activating the light source assembly **20,** post-curing the 3D-printed parts to be cured for assigned time (depends on the material selected).

**S103:** Adjusting the speed of the fan **501,** to maintain a continuous cooling of the post-curing device at a lower speed.

When the temperature sensor **412** detects that the temperature of the heating chamber **12** reaches 80°C, heating element **421** will be tuned down to a lower wattage, providing less heat into the chamber. However, fan **501** will continue to blow cold airflow into heating chamber **12.**

When the curing is done, light source assembly **20** and heating element **421** will be deactivated, but not the fan **501.** It will be continuously blowing cold air into the post-curing device **1000,** taking heat away from the system for user to safely take the 3D-printed parts out. Once the temperature sensor **412** detects the temperature of the heating chamber **12** has been reduced to 30°C, the fan **501** will be turned back down to its minimum level.

Moreover, in some exemplary embodiments, a method may include the steps of:

A post-curing device with heating and cooling system has been described. The foregoing description of the various exemplary embodiments of the invention has been presented for the purposes of illustration and disclosure. It is not intended to be exhaustive or to limit the invention to the precise form disclosed. Many modifications and variations are possible in light of the above teaching without departing from the spirit of the invention.

**Claims**

1. A device (1000) for post-curing a three-dimensionally (3D) printed object, comprising:

   a curing chamber (1001) formed by a body (1007) with a removable platform (1002) adapted to receive a 3D-printed part;
   one or more curing light assemblies (1003) coupled to the body (1007) and adapted to emit curing light onto the 3D-printed part;
   an airflow module (1004) for generating an airflow within the curing chamber (1001); and
   a heating module (1005) adapted to control a temperature of the airflow;
   wherein the airflow module (1004) and heating module (1005) are configured to simultaneously:

   dissipate residual heat from the curing chamber (1001), and
   heat the airflow circulated within the curing chamber (1001) to facilitate curing the 3D-printed object.

2. The device of claim 1, wherein the one or more light assemblies (1003, 20) are insertably housed inside one or more insertion spaces (11) formed within walls of the body (1007).

3. The device of claim 1, wherein the airflow module (1004) includes a plurality of chambers formed within walls of the body.

4. The device of claim 1, further including a drawer system (1006) adapted to remove the removable platform from within the curing chamber.

5. The device of claim 1, wherein the heating module includes a heating element adapted to receive a portion of the airflow generated by the airflow module.

6. The device of claim 3, wherein at least some of the plurality of chambers formed within the walls of the body are heat dissipation chambers and the airflow module is adapted to direct a portion of the airflow through the heat dissipation chambers.

7. The device of claim 1,

   wherein the one or more light assemblies (1003, 20) are housed inside one or more insertion spaces (11) formed within walls of the body (1007); and
   wherein the airflow module (1004) includes a plurality of chambers formed within side walls of the body.

8. The device of claim 7, further comprising:

   a heat dissipation chamber situated along lateral walls of the body; and
   an auxiliary chamber of the body in thermal communication with the heat dissipation chamber, wherein:

the heat dissipation chamber is adapted to expel hot airflow from the curing camber; and
the auxiliary chamber is adapted to facilitate the hot airflow through the first heat dissipation chamber; and
preferably further comprising a cap including at least a portion of the heat dissipation chamber.

9. The device of claim 7, wherein the one or more light source assemblies are insertably housed in a section of each of the one or more insertion spaces, or wherein the one or more insertion spaces are adapted to have multiple sections.

10. The device of claim 7, wherein the airflow module includes a set of air intakes adapted to facilitate removal of heat from a display.

11. The device of claim 7, wherein the one or more insertion spaces include a first section and a second section, wherein the first section is adapted to run along one side wall of a drawer housing the removable platform, and the second section is adapted to run along the opposite side wall of the drawer.

12. The device of claim 1 or 7, wherein the heating module is adapted to preheat the curing chamber.

13. The device of claim 1 or 7, wherein the heating module further includes a housing element adapted to distribute heated airflow within a heating chamber of the body.

14. The device of claim 3 or 7, wherein at least some of the plurality of chambers formed within the walls of the body are auxiliary chambers adapted to facilitate uniform heating of the 3D-printed part.

15. The device of claim 14, wherein the one or more curing light source assemblies are coupled to one or more heat sinks, the one or more heat sinks adapted to transfer heat from the one or more curing light source assemblies to at least one or more of the heat dissipation chambers.

100

102                                          104

| Processing Module | Selective Post-curing Module |
| Model Data<br>- Model Structure<br>- Desired Properties<br>- Curing Tool Path | Curing Chamber — 400 |

3D Printing Module — 106

3D-printed Object

FIG. 1

FIG. 2A

FIG. 2B

300

| 301 | Receive Data Of A 3D-printed Object |
|---|---|

| 302 | Determine Curing Tool Path Configured To Achieve A Post-cured 3D Object Having Variable Properties Along Different Regions Of The 3D-printed Object |
|---|---|

| 303 | Selectively Emitt A Curing Light Onto The 3D-printed Object Based On The Curing Tool Path And Digital Model, Wherein Curing The 3D-printed Object Generates The Variable Properties Along The Different Regions Of The 3D-printed Object |
|---|---|

FIG. 3

FIG. 4A

FIG. 4B

## FIG. 4C

## FIG. 4D

FIG. 4E

FIG. 5

FIG. 6

FIG. 7

FIG. 8

FIG. 9A

FIG. 9B

FIG. 9C

FIG. 9D

FIG. 9E

FIG. 9F

FIG. 9G

456

454

# FIG. 10

# FIG. 11

## FIG. 12

1200

**Intensity Relative To Max Bottom And Top Panel**

— Relative To Max (Bottom) ---Relative To Max (Top)

X

## FIG. 13

1300

**Energy Absorbed vs UV Wavelength**

UV

# FIG. 14

1400

# FIG. 15

1500

**Relative To Max (UVC) And Relative To Max (UVC)**

— Relative To Max (Bottom) --- Relative To Max (Top)

X

# FIG. 16

1600

**UVC/Disinfection Time (mins) And UVC/Disinfection Time (mins)**

— Disinfection Time Bottom (mins) --- Disinfection Time Top (mins)

FIG. 17

1700

# FIG. 18

1800

## FIG. 19A

1000

1001 — Curing Chamber

CURING LIGHT MODULE — 1003

THERMAL CONTROL MODULE — 1005

AIRFLOW MODULE — 1004

1007

DRAWER SYSTEM — 1006

PLATFORM — 1002

1000

FIG. 19B

A

Top
Vertical direction

Left

Rear
Length direction

Front

Right
Width direction

Bottom

FIG. 20

FIG. 21

FIG. 22

100a

10

20

121    101
22      10
102

31

C

12

13

31

13

32

33

11

B-B

FIG. 23

C

212

211

C

211

FIG. 24

200

211    212
213            211

700

213

211

FIG. 25

212

213

FIG. 26

C-C

FIG. 27

FIG. 28

FIG. 29B

FIG. 29A

422

421

420

FIG. 30

FIG. 31

FIG. 32

FIG. 33

A-A

FIG. 35

D-D

201
202
203
204

FIG. 34

201
13
203
202
D
D

EP 4 751 899 A1

Europäisches
Patentamt
European
Patent Office
Office européen
des brevets

# EUROPEAN SEARCH REPORT

**Application Number**

**EP 25 22 0205**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/410492 A1 (MANSOURI AMIR [US] ET AL) 29 December 2022 (2022-12-29) | 1,2,4,5, 7,9, 11-15 | INV. B29C71/02 B29C71/04 B33Y40/20 |
| Y | * paragraph [0002] * | 3,6,10 | |
| A | * paragraph [0008] - paragraph [0013] * | 8 | ADD. B29C64/30 A61C13/15 |
| | * paragraph [0058] - paragraph [0059] * | | |
| | * paragraph [0062] - paragraph [0067] * | | |
| | * paragraph [0073] - paragraph [0075] * | | |
| | * paragraph [0084] - paragraph [0092] * | | |
| | * paragraph [0101] - paragraph [0104] * | | |
| | * figures * | | |
| | ----- | | |
| Y | US 2020/246120 A1 (BENZ OLIVER [LI]) 6 August 2020 (2020-08-06) | 3,6,10 | |
| | * paragraph [0002] - paragraph [0009] * | | |
| | * paragraph [0020] - paragraph [0031] * | | |
| | * paragraph [0033] - paragraph [0062] * | | |
| | * paragraph [0075] - paragraph [0118] * | | |
| | * figures * | | |
| | ----- | | |

**TECHNICAL FIELDS SEARCHED (IPC)**

B29C
B33Y
A61C

The present search report has been drawn up for all claims

| Place of search | Date of completion of the search | Examiner |
|---|---|---|
| The Hague | 26 March 2026 | Fageot, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 22 0205

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| US 2022410492 A1 | 29-12-2022 | US 11433619 B1 | 06-09-2022 |
| | | US 2022410492 A1 | 29-12-2022 |
| | | US 2023339190 A1 | 26-10-2023 |
| | | US 2025100218 A1 | 27-03-2025 |
| | | US 2025108567 A1 | 03-04-2025 |
| US 2020246120 A1 | 06-08-2020 | CA 3066136 A1 | 06-08-2020 |
| | | CN 111531890 A | 14-08-2020 |
| | | EP 3692947 A1 | 12-08-2020 |
| | | ES 2923285 T3 | 26-09-2022 |
| | | JP 7008389 B2 | 25-01-2022 |
| | | JP 2020128084 A | 27-08-2020 |
| | | US 2020246120 A1 | 06-08-2020 |

EPO FORM P0459

For more details about this annex : see Official Journal of the European Patent Office, No. 12/82

**REFERENCES CITED IN THE DESCRIPTION**

**Patent documents cited in the description**

- US 21647123
- US 90222122
- US 51188121
- US 63083772